(19)

Europäisches Patentamt

European Patent Office

Office européen des brevets

(11)     **EP 4 468 591 A1**

(12)     **EUROPEAN PATENT APPLICATION**
published in accordance with Art. 153(4) EPC

(43) Date of publication:
    **27.11.2024 Bulletin 2024/48**

(21) Application number: **22921003.4**

(22) Date of filing: **28.03.2022**

(51) International Patent Classification (IPC):
    **H02P 23/04** *(2006.01)*        **B62D 5/04** *(2006.01)*
    **B62D 6/00** *(2006.01)*        **H02P 23/12** *(2006.01)*

(52) Cooperative Patent Classification (CPC):
    **B62D 5/0472; B62D 5/04; B62D 5/0463;
    B62D 6/00; H02P 21/05; H02P 21/20; H02P 23/04;**
    H02P 2205/05

(86) International application number:
    **PCT/JP2022/015152**

(87) International publication number:
    **WO 2023/139808 (27.07.2023 Gazette 2023/30)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(30) Priority: **19.01.2022 JP 2022006684**

(71) Applicant: **JTEKT Corporation
    Kariya-shi, Aichi 448-8652 (JP)**

(72) Inventors:
    • **SHOJI, Naoki
      Kariya-shi, Aichi 448-8652 (JP)**
    • **ITAMOTO, Hidenori
      Kariya-shi, Aichi 448-8652 (JP)**
    • **TAMAIZUMI, Terutaka
      Kariya-shi, Aichi 448-8652 (JP)**
    • **TAMAKI, Hiromasa
      Kariya-shi, Aichi 448-8652 (JP)**
    • **NITTA, Shingo
      Kariya-shi, Aichi 448-8652 (JP)**
    • **ZHOU, Xin
      Kariya-shi, Aichi 448-8652 (JP)**
    • **TSUJII, Shunsuke
      Kariya-shi, Aichi 448-8652 (JP)**

(74) Representative: **Winter, Brandl - Partnerschaft
    mbB
    Alois-Steinecker-Straße 22
    85354 Freising (DE)**

(54)     **MOTOR CONTROL DEVICE**

(57)     A target motor torque command value setting unit includes a basic torque command value setting unit that sets a basic torque command value, a correction unit that corrects a basic target torque set by a basic target torque setting unit using resonance control torque, and a motor torque command value computation unit that computes a motor torque command value based on the basic target torque following correction by the correction unit. The resonance control torque is a sum of a first torque obtained by multiplying a differential value of steering torque by a predetermined first gain, and a second torque obtained by multiplying the steering torque by a predetermined second gain.

FIG. 5

EP 4 468 591 A1

# EP 4 468 591 A1

**Description**

TECHNICAL FIELD

This invention relates to a motor control device that controls an electric motor that applies steering force to an output shaft linked to a steering wheel via a torsion bar.

BACKGROUND ART

Patent Document 1 discloses that a disturbance torque, which is a torque other than a motor torque that acts on a motor-driven object, is subtracted from a basic torque command value, and a vibration suppression torque obtained by multiplying steering torque (torsion bar torque) by a predetermined vibration suppression gain is added to the subtraction results, thereby computing a torque command value for an output shaft. The basic torque command value includes a feedback torque obtained by performing PD (proportional derivative) computation with respect to deviation between an automatic steering angle command value and a steering angle detection value or a steering angle estimation value.

In the invention described in Patent Document 1, vibration is suppressed by setting a vibration suppression gain, a proportional gain used in PD computation, and a differential gain used in PD computation, to respective predetermined values.

Related Art Documents

Patent Documents

Patent Document 1: Japanese Unexamined Patent Application Publication No. 2018-183046 (JP 2018-183046 A)

SUMMARY OF THE INVENTION

Problem to be Solved by the Invention

In the invention described in Patent Document 1, vibration can be suppressed, but resonant frequency of the system is fixed to mechanical natural frequency (resonant frequency) of a steering wheel, and accordingly the resonant frequency of the system cannot be optionally set.

An object of this invention is to provide a motor control device that enables the resonant frequency of the system to be optionally set.

Means for Solving the Problem

An embodiment of the present invention provides a motor control device that controls an electric motor that applies steering force to an output shaft linked to a steering wheel via a torsion bar, the motor control device including a steering torque detection unit that detects a steering torque applied to the steering wheel, and a motor torque command value setting unit that sets a motor torque command value that is a target value of motor torque of the electric motor, in which the motor torque command value setting unit includes a basic torque command value setting unit that sets a basic torque command value, a correction unit that corrects the basic torque command value set by the basic torque command value setting unit, using a resonance control torque, and a motor torque command value computation unit that computes the motor torque command value based on the basic torque command value following correction by the correction unit, and the resonance control torque is set using a first torque obtained by multiplying a differential value of the steering torque by a predetermined first gain, and a second torque obtained by multiplying the steering torque by a predetermined second gain.

According to this configuration, the resonant frequency of the system can be optionally set.

The above and other objects, features, and effects of the present invention will become apparent from the following description of an embodiment that will be given with reference to the accompanying drawings.

BRIEF DESCRIPTION OF THE DRAWINGS

[FIG. 1] FIG. 1 is a schematic diagram illustrating a schematic configuration of an electric power steering system to which a motor control device according to a first embodiment of the present invention is applied.

[FIG. 2] FIG. 2 is a block diagram for describing an electrical configuration of a motor control ECU.

[FIG. 3] FIG. 3 is a graph showing an example of setting an assist torque command value $T_{as}$ with respect to steering torque $T_{tb}$.

[FIG. 4] FIG. 4 is a schematic diagram illustrating an example of a reference EPS model that is used in a manual steering command value generation unit.

[FIG. 5] FIG. 5 is a block diagram illustrating a configuration of an angle control unit.

[FIG. 6] FIG. 6 is a schematic diagram illustrating an example of a configuration of a physical model of the electric power steering system.

[FIG. 7] FIG. 7 is a block diagram illustrating a configuration of a disturbance torque estimation unit.

[FIG. 8] FIG. 8 is a block diagram illustrating a configuration of a torque control unit.

[FIG. 9] FIG. 9 is a graph showing a setting example of a first weight $W_1$ that is set when each mode setting signal S1, S2, S3 is input.

[FIG. 10] FIG. 10 is a graph showing a setting example of a second weight $W_2$ that is set when each mode setting signal S1, S2, S3 is input.

[FIG. 11] FIG. 11 is a graph showing a setting example of a third weight $W_3$ that is set when each mode setting signal S1, S2, S3 is input.

[FIG. 12] FIG. 12 is a schematic diagram illustrating a two-inertia model corresponding to the electric power steering system in automatic steering mode or in cooperative steering mode.

[FIG. 13] FIG. 13 is a control block diagram of a feedback control system of the electric power steering system in automatic steering mode or cooperative steering mode, and is a block diagram representing a model of a column and a steering wheel that are objects of control.

[FIG. 14] FIG. 14 is a schematic diagram illustrating a two-inertia model corresponding to a conventional example.

[FIG. 15] FIG. 15 is a block diagram illustrating a configuration of a motor control ECU used in an electric power steering system according to a second embodiment.

[FIG. 16] FIG. 16 is a schematic diagram illustrating a two-inertia model corresponding to the electric power steering system including the motor control ECU illustrated in FIG. 15.

[FIG. 17] FIG. 17 is a block diagram illustrating a configuration of an angle control unit used in a motor control ECU in an electric power steering system according to a third embodiment.

[FIG. 18] FIG. 18 is a schematic diagram illustrating a two-inertia model corresponding to the electric power steering system according to the third embodiment in automatic steering mode or in cooperative steering mode.

[FIG. 19] FIG. 19 is a control block diagram of a feedback control system of the electric power steering system according to the third embodiment in automatic steering mode or in cooperative steering mode, and is a block diagram representing a model of the column and the steering wheel that are objects of control.

[FIG. 20] FIG. 20 is a block diagram illustrating an example in which a dead band processing unit is provided upstream of a second torque computation unit.

[FIG. 21] FIG. 21 is a graph showing an example of input/output characteristics of the dead band processing unit.

[FIG. 22] FIG. 22 is a graph showing another example of input/output characteristics of the dead band processing unit.

[FIG. 23] FIG. 23 is a block diagram illustrating an example in which the dead band processing unit is provided upstream of both a first torque computation unit and the second torque computation unit.

[FIG. 24] FIG. 24 is a block diagram illustrating an example in which the dead band processing unit is provided upstream of the first torque computation unit.

MODES FOR CARRYING OUT THE INVENTION

[Description of Embodiment of Present Invention]

An embodiment of the present invention provides a motor control device that controls an electric motor that applies steering force to an output shaft linked to a steering wheel via a torsion bar, the motor control device including a steering torque detection unit that detects a steering torque applied to the steering wheel, and a motor torque command value setting unit that sets a motor torque command value that is a target value of motor torque of the electric motor, in which the motor torque command value setting unit includes a basic torque command value setting unit that sets a basic torque command value, a correction unit that corrects the basic torque command value set by the basic torque command value setting unit, using a resonance control torque, and a motor torque command value computation unit that computes the motor torque command value based on the basic torque command value following correction by the correction unit, and the resonance control torque is set using a first torque obtained by multiplying a differential value of the steering torque by a predetermined first gain, and a second torque obtained by multiplying the steering torque by a predetermined second gain.

According to this configuration, the resonant frequency of the system can be optionally set.

An embodiment of the present invention further includes a rotational angle detection unit that detects a rotational angle of the electric motor, in which the basic torque command value setting unit includes an angle deviation computation unit that computes a difference between a rotational angle command value that is a target value of a rotational angle of the output shaft and a rotational angle of the output shaft computed from the rotational angle detected by the rotational angle detection unit, and a basic torque command value computation unit that computes the basic torque command value by performing predetermined feedback computation with respect to angle deviation computed by the angle deviation computation unit.

An embodiment of the present invention further includes a rotational angle detection unit that detects a rotational angle of the electric motor, in which the basic torque command value setting unit includes a target torque computation unit that computes a target torque based on a rotational angle command value that is a target value of a rotational angle of the output shaft, a feedback torque computation unit that computes a feedback torque based on the rotational angle detected by the rotational angle detection unit, and a basic torque command value computation unit that computes the basic torque command value by computing a deviation between the target torque and the feedback torque, and a gain used in the computation of the target torque and a gain used in the computation of the feedback torque are different from each other.

An embodiment of the present invention further includes a manual steering command value computation unit that generates a manual steering command value and an integrated angle command value computation unit that computes an integrated angle command value by adding the manual steering command value to an automatic steering angle command value, in which the rotational angle command value is the integrated angle command value.

An embodiment of the present invention further includes a disturbance torque estimation unit that estimates disturbance torque other than the motor torque of the electric motor acting on the output shaft, based on the motor torque command value or the motor torque generated by the electric motor, and a rotational angle of the output shaft, in which the correction unit is configured to correct the basic torque command value by using the resonance control torque and the disturbance torque.

In an embodiment of the present invention, a dead band is set for at least one of the steering torque that is an input value for computing the first torque, and the steering torque that is an input value for computing the second torque.

[Detailed Description of Embodiments of Present Invention]

Embodiments of this invention will be described in detail below with reference to the accompanying drawings.

[First Embodiment]

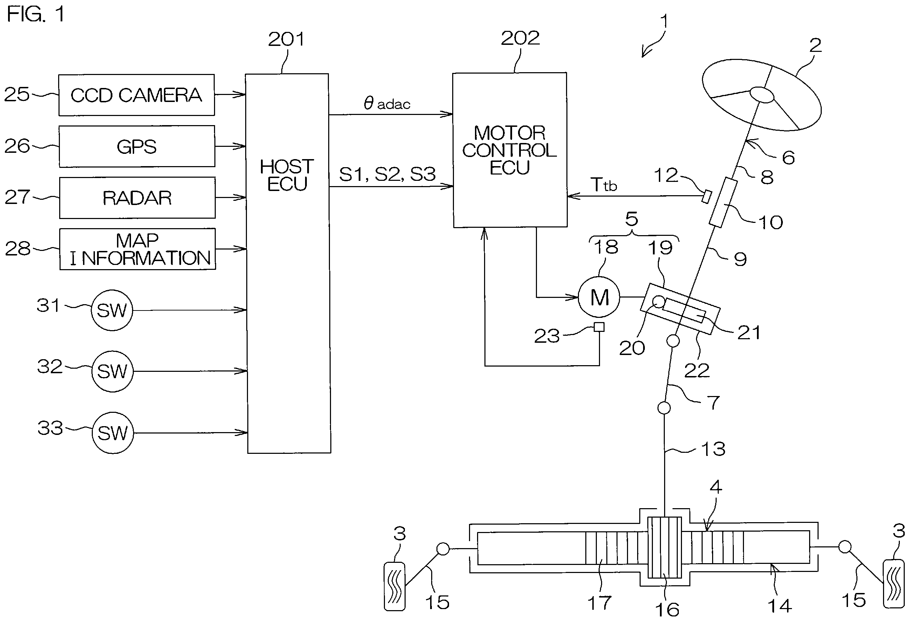

FIG. 1 is a schematic diagram illustrating a schematic configuration of an electric power steering system to which a motor control device according to a first embodiment of the present invention is applied.

An electric power steering system 1 includes a steering wheel (handle) 2 that is a steering member for steering a vehicle, a steering operation mechanism 4 that steers steered wheels 3 in conjunction with rotating of the steering wheel 2, and a steering assist mechanism 5 that assists a driver in steering. The steering wheel 2 and the steering operation mechanism 4 are mechanically linked via a steering shaft 6 and an intermediate shaft 7.

The steering shaft 6 includes an input shaft 8 linked to the steering wheel 2 and an output shaft 9 linked to the intermediate shaft 7. The input shaft 8 and the output shaft 9 are linked so as to be rotatable relative to each other via a torsion bar 10.

A torque sensor 12 is disposed near the torsion bar 10. The torque sensor 12 detects steering torque (torsion bar torque) $T_{tb}$ applied to the steering wheel 2 based on an amount of relative rotational displacement between the input shaft 8 and the output shaft 9. That is to say, the torque sensor 12 detects the steering torque $T_{tb}$ based on the amount of twisting of the torsion bar 10. In the present embodiment, the steering torque $T_{tb}$ that is detected by the torque sensor 12 is such that, for example, torque for steering in a left direction is detected as a positive value, torque for steering in a right direction is detected as a negative value, and the greater the absolute value thereof is, the greater the magnitude of the steering torque $T_{tb}$ becomes.

The steering operation mechanism 4 is made up of a rack and pinion mechanism including a pinion shaft 13 and a rack shaft 14 that is a steered shaft. The steered wheels 3 are linked to the end portions of the rack shaft 14 via tie rods 15 and knuckle arms (omitted from illustration). The pinion shaft 13 is linked to the intermediate shaft 7. The pinion shaft 13 is configured to rotate in conjunction with steering by the steering wheel 2. A pinion 16 is linked to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial direction movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial direction movement of the rack shaft 14. The steered wheels 3 are thus steered.

The steering assist mechanism 5 includes an electric motor 18 for generating a steering assist force (assist torque), and a speed reducer 19 for amplifying output torque of the electric motor 18 and transmitting the amplified torque to the steering operation mechanism 4. The speed reducer 19 is made up of a worm gear mechanism including a worm gear 20 and a worm wheel 21 that meshes with the worm gear 20. The speed reducer 19 is housed in a gear housing 22 serving as a transmission mechanism housing.

Hereinafter, reduction ratio (gear ratio) of the speed reducer 19 may be represented by N in some cases. The reduction ratio N is defined as a ratio ($\theta_{wg}/\theta_{ww}$) of a worm gear angle $\theta_{wg}$ that is a rotational angle of the worm gear 20 as to a worm wheel angle $\theta_{ww}$ that is a rotational angle of the worm wheel 21.

The worm gear 20 is rotationally driven by the electric motor 18. Also, the worm wheel 21 is linked to the output shaft 9 so as to be integrally rotatable therewith.

When the worm gear 20 is rotationally driven by the electric motor 18, the worm wheel 21 is rotationally driven so that motor torque is applied to the steering shaft 6, and also the steering shaft 6 (output shaft 9) is rotated. The rotation of the steering shaft 6 is then transmitted to the pinion shaft 13 via the intermediate shaft 7. The rotation of the pinion shaft 13 is converted into axial direction movement of the rack shaft 14. The steered wheels 3 are thus steered. That is to say, rotationally driving the worm gear 20 by the electric motor 18 enables steering assist by the electric motor 18 and steering of the steered wheels 3. The electric motor 18 is provided with a rotational angle sensor 23 for detecting a rotational angle of a rotor of the electric motor 18.

Torque that is applied to the output shaft 9 (example of an object to be driven by the electric motor 18) includes motor torque from the electric motor 18 and disturbance torque $T_{lc}$ other than the motor torque. The disturbance torque $T_{lc}$ other than the motor torque includes steering torque $T_{tb}$, road load torque (road reaction torque) $T_{rl}$, friction torque $T_f$, and so forth.

The steering torque $T_{tb}$ is torque that is applied from the steering wheel 2 side to the output shaft 9, due to force that is applied to the steering wheel 2 by the driver (driver torque), force that is generated by steering inertia, and so forth.

Road load torque $T_{rl}$ is torque that is applied from the steered wheel 3 side to the output shaft 9 via the rack shaft 14, due to self-aligning torque that is generated by tires, force that is generated by suspension and tire wheel alignment, friction force of the rack and pinion mechanism, and so forth.

The vehicle is equipped with a CCD (Charge Coupled Device) camera 25 that performs shooting of the road ahead in a direction of travel of the vehicle, a GPS (Global Positioning System) 26 for detecting the position of the own vehicle, a radar 27 for detecting road shape and obstructions, and map information memory 28 that stores map information. The vehicle is further equipped with three mode switches 31, 32, and 33 for manually switching steering modes.

As will be described later, the steering modes include a manual steering mode in which steering is performed by manual driving, an automatic steering mode in which steering is performed by automated driving, and a cooperative steering mode in which steering can be performed based on both manual driving and automated driving. Specific definitions of these steering modes will be described later.

The CCD camera 25, the GPS 26, the radar 27, and the map information memory 28 are connected to a host ECU (ECU: Electronic Control Unit) 201 for performing driver assistance control and automated driving control. The host ECU 201 performs surrounding environment recognition, own vehicle position estimation, route planning, and so forth, based on information obtained by the CCD camera 25, the GPS 26, and the radar 27, and also the map information, and determines control target values for steering and drive actuators.

In the present embodiment, the host ECU 201 sets an automatic steering command value $\theta_{adac}$ for automatic steering. In this embodiment, automatic steering control is, for example, control for causing the vehicle to travel along a target course. The automatic steering command value $\theta_{adac}$ is a target value of a steering angle for causing the vehicle to travel automatically along the target course. Processing of setting such an automatic steering command value $\theta_{adac}$ is well known, and accordingly detailed description will be omitted here. Note that automatic steering control (driver assistance control) may be, for example, lane keeping assist (LKA) control for keeping the vehicle within its lane.

The host ECU 201 also generates mode setting signals S1, S2, and S3 in accordance with operations of the mode switches 31, 32, and 33. Specifically, when the first mode switch 31 is turned on by the driver, the host ECU 201 outputs a manual steering setting signal S1 for setting the steering mode to the manual steering mode. When the second mode switch 32 is turned on by the driver, the host ECU 201 outputs an automatic steering mode setting signal S2 for setting the steering mode to the automatic steering mode. When the third mode switch 33 is turned on by the driver, the host ECU 201 outputs a cooperative steering mode setting signal S3 for setting the steering mode to the cooperative steering mode.

The automatic steering command value $\theta_{adac}$ and the mode setting signals S1, S2, and S3 that are set by the host ECU 201 are given to a motor control ECU 202 via an in-vehicle network. The steering torque $T_{tb}$ detected by the torque sensor 12 and output signals from the rotational angle sensor 23 are input to the motor control ECU 202. The motor control ECU 202 controls the electric motor 18 based on these input signals and information given from the host ECU 201.

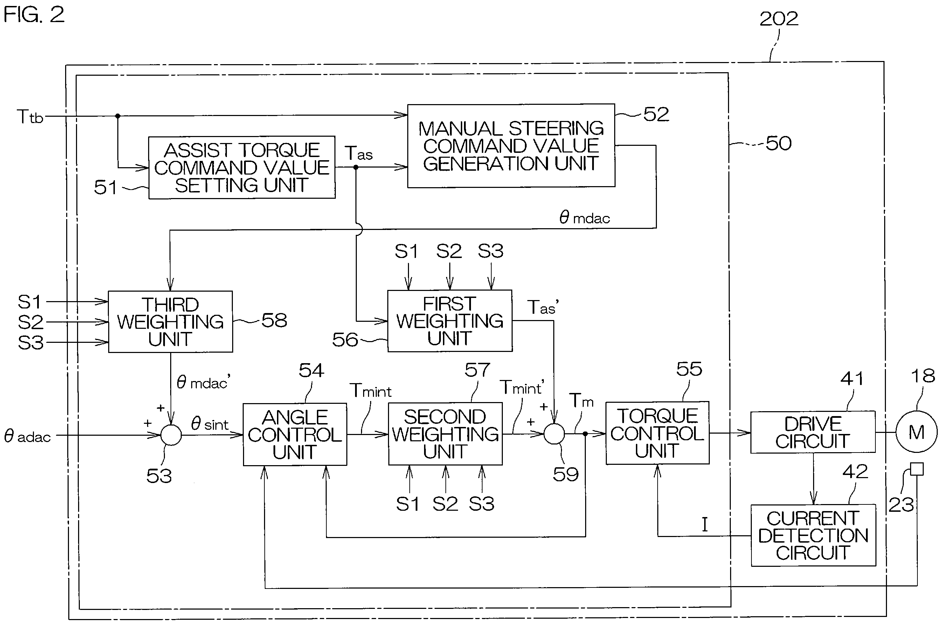

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and that supplies electric power to the electric motor 18, and a current detection circuit 42 for detecting a current flowing through the electric motor 18 (hereinafter referred to as "motor current I").

The microcomputer 50 includes a CPU and memory (such as ROM, RAM, non-volatile memory, and so forth), and functions as a plurality of functional processing units by executing a predetermined program. This plurality of functional processing units includes an assist torque command value setting unit 51, a manual steering command value generation unit 52, an integrated angle command value computation unit 53, an angle control unit 54, a torque control unit (current control unit) 55, a first weighting unit 56, a second weighting unit 57, a third weighting unit 58, and an addition unit 59. The addition unit 59 in the present embodiment is an example of "motor torque command value computation unit" according to the present invention.

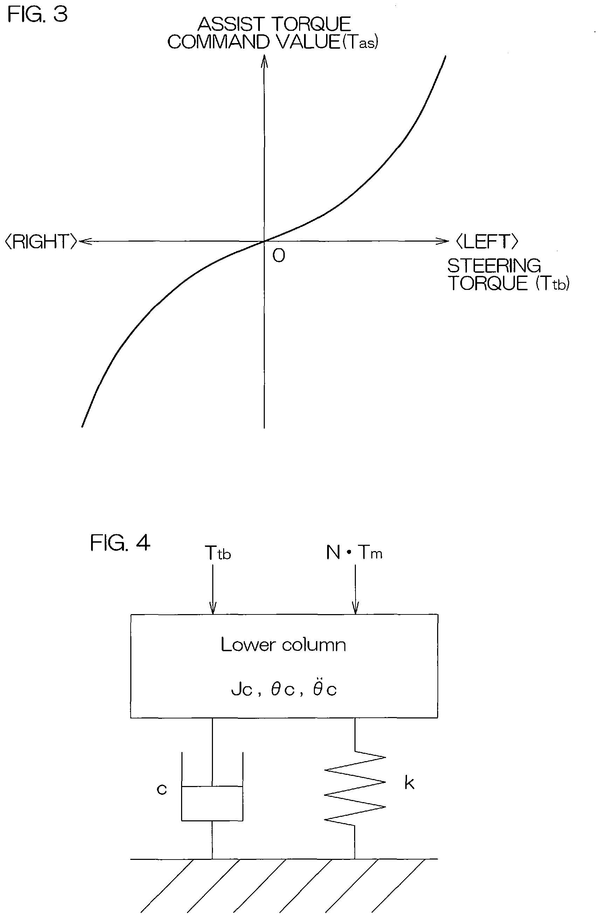

The assist torque command value setting unit 51 sets an assist torque command value $T_{as}$ that is a target value of the assist torque necessary for manual operations. The assist torque command value setting unit 51 sets the assist torque command value $T_{as}$ based on the steering torque $T_{tb}$ detected by the torque sensor 12. An example of setting the assist torque command value $T_{as}$ with respect to the steering torque $T_{tb}$ is illustrated in FIG. 3.

The assist torque command value $T_{as}$ is set to a positive value when the electric motor 18 should generate a steering assist force for steering in the left direction, and is set to a negative value when the electric motor 18 should generate a steering assist force for steering in the right direction. The assist torque command value $T_{as}$ is positive for a positive value of the steering torque $T_{tb}$, and is negative for a negative value of the steering torque $T_{tb}$. The assist torque command value $T_{as}$ is set such that the greater an absolute value of the steering torque $T_{tb}$ is, the greater an absolute value of the assist torque command value $T_{as}$ becomes.

The assist torque command value setting unit 51 may set the assist torque command value $T_{as}$ also taking into consideration a vehicle speed detected by a vehicle speed sensor that is omitted from illustration. In this case, the assist torque command value $T_{as}$ is set such that the greater the absolute value of the steering torque $T_{tb}$ is, the greater the absolute value of the assist torque command value $T_{as}$ is, and the greater the vehicle speed is, the smaller the absolute value of the assist torque command value $T_{as}$ is.

Note that the assist torque command value setting unit 51 may compute the assist torque command value $T_{as}$ by multiplying the steering torque $T_{tb}$ by a constant that is set in advance.

The first weighting unit 56 performs first weighting processing with respect to the assist torque command value $T_{as}$ set by the assist torque command value setting unit 51, in accordance with the mode setting signal that is input. Specifically, when one of the mode setting signals S1, S2, and S3 is input, the first weighting unit 56 first sets a first weight $W_1$ in accordance with the current steering mode and the mode setting signal that is input. Next, the first weighting unit 56 multiplies the assist torque command value $T_{as}$ by the first weight $W_1$. The first weighting unit 56 then gives a multiplication value $W_1 \cdot T_{as}$ to the addition unit 59 as an assist torque command value $T_{as}$' following the first weighting processing.

The manual steering command value generation unit 52 is provided to, when the driver operates the steering wheel 2, set the steering angle (more precisely, rotational angle θ of the output shaft 9) in accordance with this steering wheel operation, as a manual steering command value $\theta_{mdac}$. The manual steering command value generation unit 52 generates the manual steering command value $\theta_{mdac}$ using the steering torque $T_{tb}$ detected by the torque sensor 12 and the assist torque command value $T_{as}$ set by the assist torque command value setting unit 51. The manual steering command value generation unit 52 will be described later in detail.

The third weighting unit 58 performs third weighting processing with respect to the manual steering command value $\theta_{mdac}$ generated by the manual steering command value generation unit 52, in accordance with the mode setting signal that is input. Specifically, when one of the mode setting signals S1, S2, and S3 is input, the third weighting unit 58 first sets a third weight $W_3$ in accordance with the current steering mode and the mode setting signal that is input. Next, the third weighting unit 58 multiplies the manual steering command value $\theta_{mdac}$ by the third weight $W_3$. The third weighting unit 58 then gives a multiplication value $W_3 \cdot \theta_{mdac}$ to the integrated angle command value computation unit 53, as a manual steering command value $\theta_{mdac}$' following the third weighting processing.

The integrated angle command value computation unit 53 computes an integrated angle command value $\theta_{sint}$ by adding the manual steering command value $\theta_{mdac}$' following the third weighting processing to the automatic steering command value $\theta_{adac}$ set by the host ECU 201.

The angle control unit 54 computes an integrated motor torque command value $T_{mint}$ in accordance with the integrated angle command value $\theta_{sint}$, based on the integrated angle command value $\theta_{sint}$. The angle control unit 54 will be described in detail later.

The second weighting unit 57 performs second weighting processing with respect to the integrated motor torque command value $T_{mint}$, in accordance with the mode setting signal that is input. Specifically, when one of the mode setting signals S1, S2, and S3 is input, the second weighting unit 57 first sets a second weight $W_2$ in accordance with the current steering mode and the mode setting signal that is input. Next, the second weighting unit 57 multiplies the integrated motor torque command value $T_{mint}$ by the second weight $W_2$. The second weighting unit 57 then gives a multiplication value $W_2 \cdot T_{mint}$ to the addition unit 59 as the integrated motor torque command value $T_{mint}$' following the second weighting processing.

The addition unit 59 computes a motor torque command value $T_m$ for the electric motor 18 by adding the assist torque command value $T_{as}'$ following the first weighting processing and the integrated motor torque command value $T_{mint}'$ following the second weighting processing.

The torque control unit 55 drives the drive circuit 41 such that the motor torque of the electric motor 18 is brought closer to the motor torque command value $T_m$. The torque control unit 55 will be described in detail later.

In the present embodiment, the manual steering command value generation unit 52 uses a reference EPS model to set the manual steering command value $\theta_{mdac}$.

FIG. 4 is a schematic diagram illustrating an example of the reference EPS model that is used by the manual steering command value generation unit 52.

This reference EPS model is a single inertia model including a lower column. The lower column corresponds to the output shaft 9 and the worm wheel 21. In FIG. 4, $J_c$ is inertia of the lower column, $\theta_c$ is rotational angle of the lower column, and $T_{tb}$ is the steering torque. The steering torque $T_{tb}$, torque $N \cdot T_m$ acting on the output shaft 9 from the electric motor 18, and the road load torque $T_{rl}$, are applied to the lower column. The road load torque $T_{rl}$ is expressed by the following Expression (1) using spring constant k and viscous damping coefficient c.

[Math 1]

$$T_{rl} = -k \cdot \theta_c - c \cdot \dot{\theta}_c \quad \cdots (1)$$

In the present embodiment, the spring constant k and the viscous damping coefficient c are set to predetermined values obtained in advance through experiments, analysis, and so forth.

An equation of motion of the reference EPS model is expressed by the following Expression (2).

[Math 2]

$$J_c \cdot \ddot{\theta}_c = T_{tb} + N \cdot T_m - k \cdot \theta_c - c \cdot \dot{\theta}_c \quad \cdots (2)$$

The manual steering command value generation unit 52 computes the rotational angle $\theta_c$ of the lower column by solving the differential equation represented by Expression (2) by substituting the steering torque $T_{tb}$ detected by the torque sensor 12 into $T_{tb}$ and substituting the assist torque command value $T_{as}$ set by the assist torque command value setting unit 51 into $T_m$. The manual steering command value generation unit 52 then generates the rotational angle $\theta_c$ of the lower column, which is obtained, as the manual steering command value $\theta_{mdac}$.

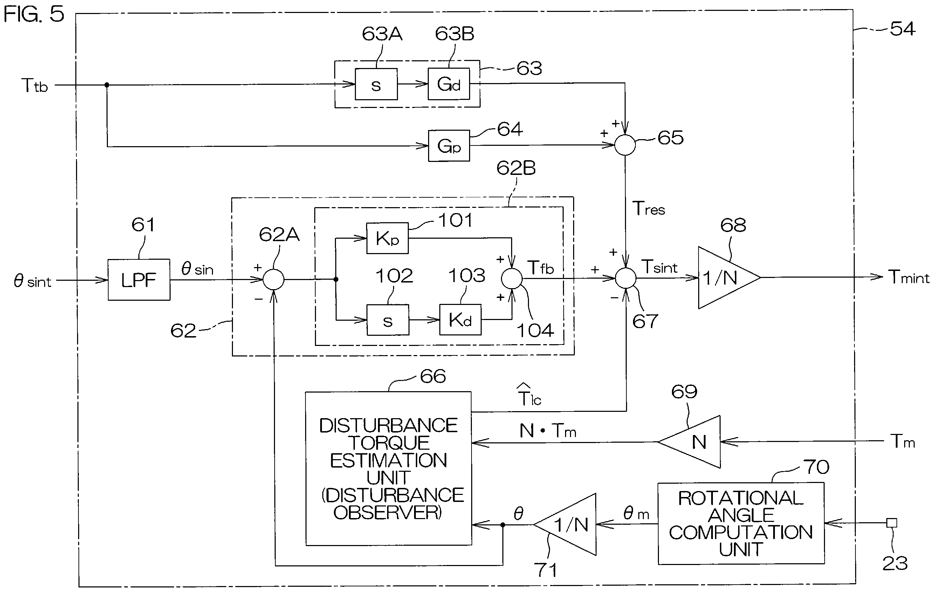

FIG. 5 is a block diagram illustrating a configuration of the angle control unit 54.

The angle control unit 54 computes the integrated motor torque command value $T_{mint}$ based on the integrated angle command value $\theta_{sint}$, the steering torque $T_{tb}$, and the output signal of the rotational angle sensor 23. The angle control unit 54 includes a low-pass filter (LPF) 61, a feedback control unit 62, a first torque computation unit 63, a second torque computation unit 64, a first torque addition unit 65, a disturbance torque estimation unit 66, a second torque addition unit 67, a first reduction ratio division unit 68, a reduction ratio multiplication unit 69, a rotational angle computation unit 70, and a second reduction ratio division unit 71.

The reduction ratio multiplication unit 69 converts a motor torque command value $T_m$ into an output shaft torque command value $N \cdot T_m$ that acts on the output shaft 9, by multiplying the motor torque command value $T_m$, which is computed by the addition unit 59 (see FIG. 2), by a speed reduction ratio N of the speed reducer 19.

The rotational angle computation unit 70 computes a rotor rotational angle $\theta_m$ of the electric motor 18 based on the output signal from the rotational angle sensor 23. The second reduction ratio division unit 71 converts the rotor rotational angle $\theta_m$ into a rotational angle (actual steering angle) $\theta$ of the output shaft 9 by dividing the rotor rotational angle $\theta_m$, which is computed by the rotational angle computation unit 70, by the speed reduction ratio N.

The low-pass filter 61 performs low-pass filtering processing with respect to the integrated angle command value $\theta_{sint}$. An integrated angle command value $\theta_{sin}$ following the low-pass filter processing is given to the feedback control unit 62.

The feedback control unit 62 is provided to bring the actual steering angle $\theta$ computed by the second reduction ratio division unit 71 closer to the integrated angle command value $\theta_{sin}$ following the low-pass filter processing. The feedback control unit 62 includes an angle deviation computation unit 62A and a PD control unit 62B. The angle deviation computation unit 62A computes deviation $\Delta\theta$ (= $\theta_{sin} - \theta$) between the integrated angle command value $\theta_{sin}$ and the actual steering angle $\theta$. Note that the angle deviation computation unit 62A may compute, as the angle deviation $\Delta\theta$, a deviation ($\theta_{sin} - \hat{\theta}$) between the integrated angle command value $\theta_{sin}$ and a steering angle estimation value $\hat{\theta}$ computed by the disturbance torque estimation unit 66.

The PD control unit 62B includes a proportional gain multiplication unit 101, a differential computation unit 102, a differential gain multiplication unit 103, and an addition unit 104. The proportional gain multiplication unit 101 multiplies the

angle deviation $\Delta\theta$ computed by the angle deviation computation unit 62A by a proportional gain $K_p$.

The differential computation unit 102 computes a time differential value $d\Delta\theta/dt$ of the angle deviation $\Delta\theta$. The differential gain multiplication unit 103 multiplies the differential value $d\Delta\theta/dt$ computed by the differential computation unit 102 by a differential gain $K_d$. The addition unit 104 adds multiplication results $K_p \cdot \Delta\theta$ of the proportional gain multiplication unit 101 and multiplication results $K_d \cdot d\Delta\theta/dt$ of the differential gain multiplication unit 103 to compute feedback control torque $T_{tb}$. In this embodiment, the feedback control torque $T_{fb}$ is an example of "basic torque command value" according to the present invention.

The first torque computation unit 63 includes a differential computation unit 63A and a first gain multiplication unit 63B. The differential computation unit 63A computes a time differential value $dT_{tb}/dt$ of the steering torque $T_{tb}$. The first gain multiplication unit 63B computes a first torque $G_d \cdot dT_{tb}/dt$ by multiplying the differential value $dT_{tb}/dt$ computed by the differential computation unit 63A by a first gain $G_d$.

The second torque computation unit 64 computes a second torque $G_p \cdot T_{tb}$ by multiplying the steering torque $T_{tb}$ by a second gain $G_p$.

The first torque addition unit 65 adds the first torque $G_d \cdot dT_{tb}/dt$ and the second torque $G_p \cdot T_{tb}$ to compute a resonance control torque $T_{res}$ (= $G_d \cdot dT_{tb}/dt + G_p \cdot T_{tb}$).

The disturbance torque estimation unit 66 is provided to estimate non-linear torque (disturbance torque: torque other than the motor torque) that is generated as disturbance in the output shaft 9 (example of object to be controlled by the electric motor 18). The disturbance torque estimation unit 66 estimates the disturbance torque (disturbance load) $T_{lc}$, the steering angle $\theta$, and a steering angle differential value (angular velocity) $d\theta/dt$, based on the output shaft torque command value $N \cdot T_m$ and the actual steering angle $\theta$. Estimated values of the disturbance torque $T_{lc}$, the steering angle $\theta$, and the steering angle differential value (angular velocity) $d\theta/dt$ are represented by $\char`^T_{lc}$, $\char`^\theta$, and $d\char`^\theta/dt$, respectively. The disturbance torque estimation unit 66 will be described in detail later.

The disturbance torque estimation value $\char`^T_{lc}$ computed by the disturbance torque estimation unit 66 is given to the second torque addition unit 67 as a disturbance torque compensation value.

The second torque addition unit 67 subtracts the disturbance torque estimation value $\char`^T_{lc}$ from a value obtained by adding the resonance control torque $T_{res}$ to the feedback control torque (basic torque command value) $T_{fb}$, thereby computing an integrated steering torque command value $T_{sint}$ (= $T_{fb} + G_d \cdot dT_{tb}/dt + G_p \cdot T_{tb} - \char`^T_{lc}$).

The integrated steering torque command value $T_{sint}$ is given to the first reduction ratio division unit 68. The first reduction ratio division unit 68 computes the integrated motor torque command value $T_{mint}$ by dividing the integrated steering torque command value $T_{sint}$ by the reduction ratio N. This integrated motor torque command value $T_{mint}$ is given to the second weighting unit 57 (see FIG. 2).

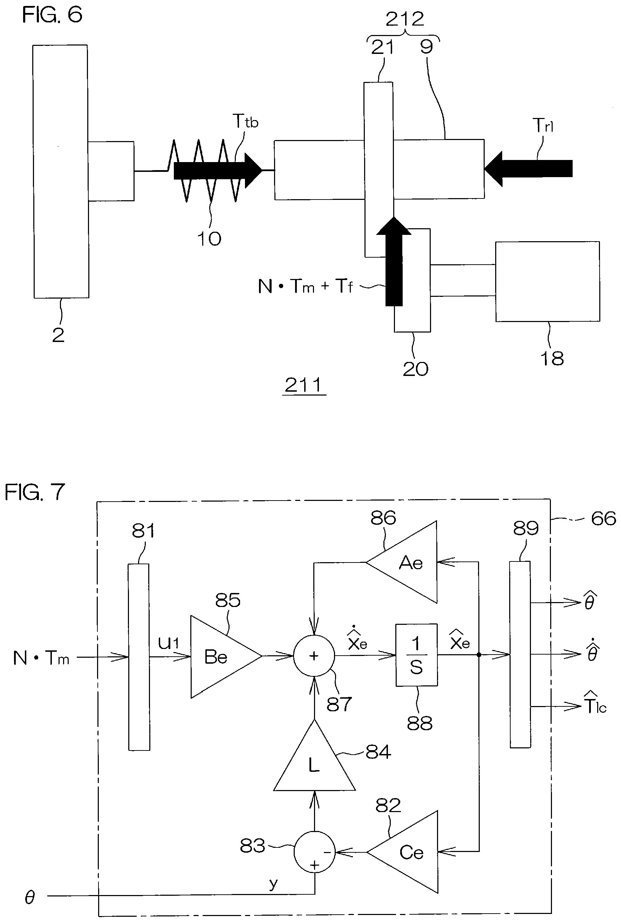

The disturbance torque estimation unit 66 will be described in detail. The disturbance torque estimation unit 66 is made up of a disturbance observer that estimates the disturbance torque $T_{lc}$, the steering angle $\theta$, and the angular velocity $d\theta/dt$ using, for example, a physical model 211 of the electric power steering system 1, as illustrated in FIG. 6.

This physical model 211 includes the output shaft 9 and a steering column 212 (an example of a plant or a motor-driven object) including the worm wheel 21 fixed to the output shaft 9. The steering column 212 has inertia J. This inertia J includes inertia of the worm wheel 21 (worm wheel inertia), inertia of the worm gear 20 (worm gear inertia), inertia of the shaft of the electric motor 18 (motor shaft inertia), inertia of the pinion shaft 13 (pinion shaft inertia), and so forth. The steering torque $T_{tb}$ is applied from the steering wheel 2 to the steering column 212 via the torsion bar 10, and also the road load torque $T_{rl}$ is applied thereto from the steered wheels 3 side.

Furthermore, a driving torque $N \cdot T_m$ equivalent to the output shaft torque command value $N \cdot T_m$ is applied to the steering column 212 from the electric motor 18 via the worm gear 20, and also a friction torque $T_f$ is applied by friction between the worm wheel 21 and the worm gear 20.

An equation of motion regarding inertia of the physical model 211 is expressed by the following Expression (3).

[Math 3]

$$J\ddot{\theta} = N \cdot T_m + T_{lc} \quad \cdots (3)$$
$$T_{lc} = T_{tb} + T_{rl} + T_f$$

$d^2\theta/dt^2$ is angular acceleration of the steering column 212. N is the reduction ratio of the speed reducer 19. $T_{lc}$ indicates disturbance torque other than the motor torque that is applied to the steering column 212. While the disturbance torque $T_{lc}$ is indicated being as the sum of the steering torque $T_{tb}$, the road load torque $T_{rl}$, and the friction torque $T_f$ in the present embodiment, the disturbance torque $T_{lc}$ actually includes torque other than these.

An equation of state for the physical model 211 in FIG. 6 is expressed by the following Expression (4).

[Math 4]

$$\begin{cases} \dot{x} = Ax + B_1u_1 + B_2u_2 \\ y = Cx + Du_1 \end{cases} \quad \cdots (4)$$

In the above Expression (4), x is a state variable vector, $u_1$ is a known input vector, $u_2$ is an unknown input vector, and y is an output vector (measured value). Also, in the above Expression (4), A is a system matrix, $B_1$ is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is expressed by the following Expression (5).

[Math 5]

$$\begin{cases} \dot{x}_e = A_ex_e + B_eu_1 \\ y = C_ex_e \end{cases} \quad \cdots (5)$$

In the above Expression (5), $x_e$ is a state variable vector of the extended system, and is expressed by the following Expression (6).

[Math 6]

$$x_e = \begin{bmatrix} x \\ u_2 \end{bmatrix} \quad \cdots (6)$$

In the above expression (5), $A_e$ is a system matrix of the extended system, $B_e$ is a known input matrix of the extended system, and $C_e$ is an output matrix of the extended system.

A disturbance observer (extended state observer) expressed by an equation of the following Expression (7) is constructed from the extended equation of state expressed by the above Expression (5).

[Math 7]

$$\begin{cases} \dot{\hat{x}}_e = A_e\hat{x}_e + B_eu_1 + L(y - \hat{y}) \\ \hat{y} = C_e\hat{x}_e \end{cases} \quad \cdots (7)$$

In Expression (7), $\hat{x}_e$ represents an estimated value of $x_e$. Also, L is an observer gain. Also, $\hat{y}$ represents an estimated value of y. $\hat{x}_e$ is given by the following Expression (8).

[Math 8]

$$\hat{x}_e = \begin{bmatrix} \hat{\theta} \\ \dot{\hat{\theta}} \\ \hat{T}_{lc} \end{bmatrix} \quad \cdots (8)$$

In Expression (8), $\hat{\theta}$ is an estimated value of $\theta$, and $\hat{T}_{lc}$ is an estimated value of $T_{lc}$.

The disturbance torque estimation unit 66 computes the state variable vector $\hat{x}_e$ based on the equation of the above Expression (7).

FIG. 7 is a block diagram illustrating a configuration of the disturbance torque estimation unit 66.

The disturbance torque estimation unit 66 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $N \cdot T_m$ computed by the reduction ratio multiplication unit 69 (see FIG. 5) is given to the input vector input unit 81. The input vector input unit 81 outputs an input vector $u_1$.

Output of the integration unit 88 is the state variable vector $^\wedge x_e$ (see the above Expression (8)). At the start of computation, an initial value is given as the state variable vector $^\wedge x_e$. The initial value of the state variable vector $^\wedge x_e$ is, for example, 0.

The system matrix multiplication unit 86 multiplies the state variable vector $^\wedge x_e$ by a system matrix $A_e$. The output matrix multiplication unit 82 multiplies the state variable vector $^\wedge x_e$ by an output matrix $C_e$.

The first addition unit 83 subtracts output ($C_e \cdot ^\wedge x_e$) of the output matrix multiplication unit 82 from the output vector (measured value) y that is the actual steering angle $\theta$ computed by the second reduction ratio division unit 71 (see FIG. 5). That is to say, the first addition unit 83 computes the difference (y - $^\wedge$y) between the output vector y and the output vector estimation value $^\wedge$y (= $C_e \cdot ^\wedge x_e$). The gain multiplication unit 84 multiplies output (y - $^\wedge$y) of the first addition unit 83 by an observer gain L (see the above Expression (7)).

The input matrix multiplication unit 85 multiplies the input vector $u_1$ output from the input vector input unit 81 by an input matrix $B_e$. The second addition unit 87 computes a differential value $d^\wedge x_e/dt$ of the state variable vector by adding output ($B_e \cdot u_1$) of the input matrix multiplication unit 85, output ($A_e \cdot ^\wedge x_e$) of the system matrix multiplication unit 86, and output (L(y - $^\wedge$y)) of the gain multiplication unit 84. The integration unit 88 computes the state variable vector $^\wedge x_e$ by integrating output ($d^\wedge x_e/dt$) of the second addition unit 87. The state variable vector output unit 89 computes the disturbance torque estimation value $^\wedge T_{lc}$, the steering angle estimation value $^\wedge \theta$, and the angular velocity estimation value $d^\wedge \theta/dt$, based on the state variable vector $^\wedge x_e$.

Unlike the extended state observer described above, a typical disturbance observer is made up of an inverse model of a plant and a low-pass filter. An equation of motion of the steering column is expressed by Expression (3), as described above. Thus, the inverse model of the steering column is given by the following Expression (9).

[Math 9]

$$T_{lc} = J\ddot{\theta} - N \cdot T_m \quad \cdots (9)$$

The inputs to the typical disturbance observer are $J \cdot d^2\theta/dt^2$ and $N \cdot T_m$, and due to the second derivative of the actual steering angle $\theta$ being used, effects of noise of the rotational angle sensor 23 are great. Conversely, the extended state observer according to the embodiment described above estimates the disturbance torque using an integral type, and accordingly, the effects of noise due to differentiation can be reduced.

Note that the typical disturbance observer made up of the inverse model of the steering column and the low-pass filter may be used as the disturbance torque estimation unit 66.

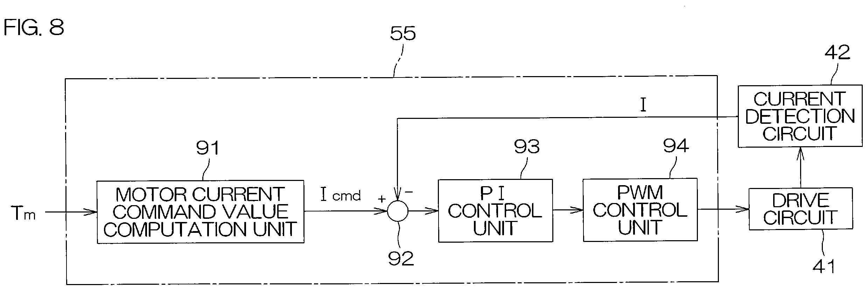

FIG. 8 is a schematic diagram illustrating a configuration of the torque control unit 55.

The torque control unit 55 (see FIG. 2) includes a motor current command value computation unit 91, a current deviation computation unit 92, a PI control unit 93, and a PWM (Pulse Width Modulation) control unit 94.

The motor current command value computation unit 91 computes a motor current command value $I_{cmd}$ by dividing the motor torque command value $T_m$ computed by the addition unit 59 (see FIG. 2) by a torque constant Kt of the electric motor 18.

The current deviation computation unit 92 computes a deviation $\Delta I$ (= $I_{cmd}$ - I) between the motor current command value $I_{cmd}$ obtained by the motor current command value computation unit 91 and the motor current I detected by the current detection circuit 42.

The PI control unit 93 generates a drive command value for controlling the motor current I flowing through the electric motor 18 to the motor current command value $I_{cmd}$ by performing a PI computation (proportional-integral computation) with respect to the current deviation $\Delta I$ computed by the current deviation computation unit 92. The PWM control unit 94 generates a PWM control signal with a duty cycle corresponding to the drive command value, and performs supply thereof to the drive circuit 41. Electric power corresponding to the drive command value is thus supplied to the electric motor 18.

Next, actions of the present embodiment will be described.

The automatic steering mode refers to a steering mode in which the electric motor 18 is controlled based only on the automatic steering command value $\theta_{adac}$. The manual steering mode refers to a steering mode in which the electric motor 18 is controlled based only on the assist torque command value $T_{as}$. The cooperative steering mode refers to a steering mode in which the electric motor 18 is controlled based on the integrated angle command value $\theta_{sint}$ obtained by taking into consideration both the automatic steering command value $\theta_{adac}$ and the manual steering command value $\theta_{mdac}$.

When the steering mode is set to the cooperative steering mode, the first weight $W_1$ is 0, and the second weight $W_2$ and the third weight $W_3$ are 1.0.

When the steering mode is set to the automatic steering mode, the first weight $W_1$ and the third weight $W_3$ are

zero, and the second weight $W_2$ is 1.0.

When the steering mode is set to the manual steering mode, the first weight $W_1$ is 1.0, the second weight $W_2$ is zero, and the third weight $W_3$ is 0 or 1.0.

That is to say, this motor control ECU 202 can switch the steering mode among the normal steering mode, the automatic steering mode, and the manual steering mode, by operation of the mode switches 31, 32, and 33 by the driver.

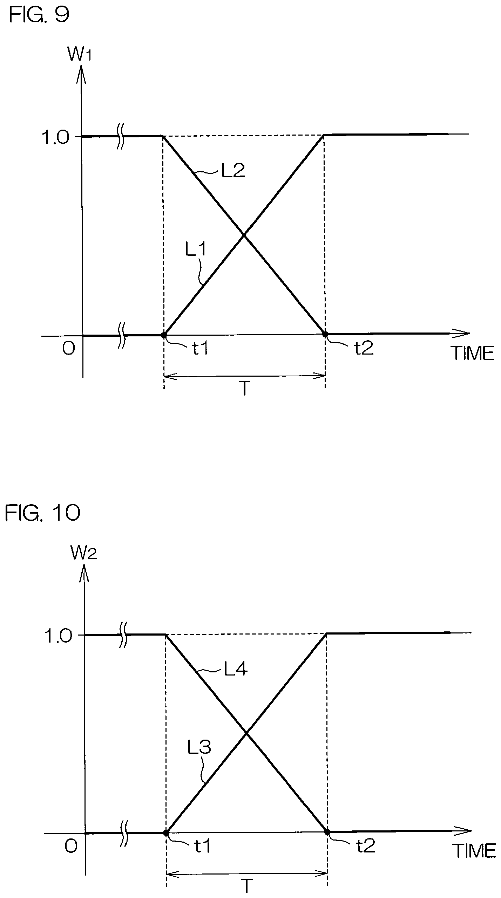

Examples of setting the first weight $W_1$, the second weight $W_2$, and the third weight $W_3$, in conjunction with switching of the steering mode, are shown in FIGS. 9, 10, and 11, respectively.

In FIG. 9, line L1 indicates a state of the first weight $W_1$ gradually increasing from zero to 1.0 from as a predetermined amount of time T elapses from input time (point in time t1) of each mode setting signal S1, S2, S3 to point in time t2, and line L2 indicates a state of the first weight $W_1$ gradually decreasing from 1.0 to zero therein.

In FIG. 10, line L3 indicates a state of the second weight $W_2$ gradually increasing from zero to 1.0 from point in time t1 to point in time t2, and line L4 indicates a state of the second weight $W_2$ gradually decreasing from 1.0 to zero therein.

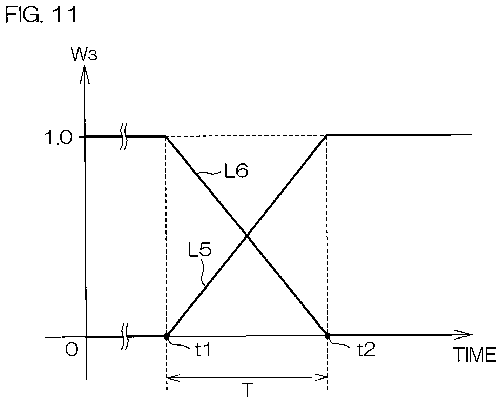

In FIG. 11, line L5 indicates a state of the third weight $W_3$ gradually increasing from zero to 1.0 from point in time t1 to point in time t2, and line L6 indicates a state of the third weight $W_3$ gradually decreasing from 1.0 to zero therein.

The absolute value of the assist torque command value $T_{as}$' following the first weighting processing, the absolute value of the integrated motor torque command value $T_{mint}$' following the second weighting processing, and the absolute value of the manual steering command value $\theta_{mdac}$' following the third weighting processing are thus gradually increased or gradually decreased, and accordingly, switching among the steering modes is smoothly performed.

The amount of time T required to switch the first weight $W_1$, the second weight $W_2$, and the third weight $W_3$ between zero and 1.0 is set to a predetermined value obtained in advance through experiments, analysis, and so forth. Also, the amount of time T required to switch the weight between zero and 1.0 may be set to be different among the first weight $W_1$, the second weight $W_2$, and the third weight $W_3$. Also, the first weight $W_1$, the second weight $W_2$, and the third weight $W_3$ may be set to gradually increase or gradually decrease nonlinearly rather than linearly.

In the present embodiment, when an operation of the mode switches 31, 32, and 33 that does not involve changing of the steering mode is performed, this operation is considered to be invalid. Also, in the present embodiment, when any of the mode switches 31, 32, 33 is operated before the predetermined amount of time T has elapsed since one of the mode switches 31, 32, or 33 was operated, this operation is considered to be invalid.

Note that while the switching of the steering mode is performed by the mode switches 31, 32, and 33, the host ECU 201 may switch the steering mode in accordance with an ON/OFF signal of a driver assistance function or an automated driving function, an obstruction, a state of the driver, a driver operation of the accelerator, brake, or the like, and the state of the vehicle traveling. In this case, the host ECU 201 generates a mode setting signal in accordance with the ON/OFF signal of the driver assistance function or the automated driving function, the obstruction, the state of the driver, the driver operation of the accelerator, brake, or the like, or the state of the vehicle traveling, and gives the mode setting signal to the motor control ECU 202.

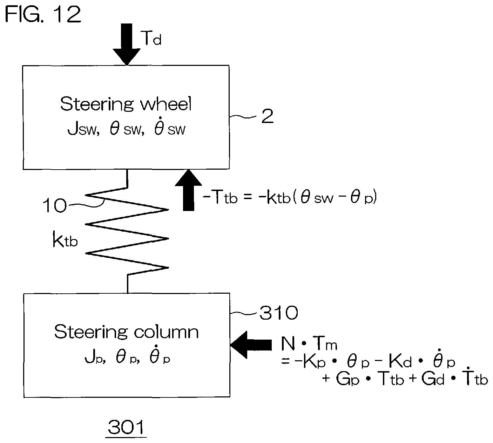

FIG. 12 is a schematic diagram illustrating a two-inertia model 301 corresponding to the electric power steering system 1 in automatic steering mode or in cooperative steering mode.

The two-inertia model 301 includes a steering wheel 2, a torsion bar 10, and a steering column 310.

The steering wheel 2 has inertia of the steering wheel 2 (hereinafter referred to as steering wheel inertia $J_{sw}$). The steering column 310 has column inertia $J_p$. The column inertia $J_p$ includes inertia of the worm wheel 21 (worm wheel inertia), inertia of the worm gear 20 (worm gear inertia), inertia of the shaft of the electric motor 18 (motor shaft inertia), inertia of the pinion shaft 13 (pinion shaft inertia), and so forth.

In FIG. 12, $\theta_{sw}$ is a rotational angle of the steering wheel 2 (hereinafter referred to as wheel angle $\theta_{sw}$), and $d\theta_{sw}/dt$ is angular velocity of the steering wheel 2 (hereinafter referred to as wheel angular velocity $d\theta_{sw}/dt$).

Also, $\theta_p$ is a rotational angle of the steering column 310 (hereinafter referred to as column angle $\theta_p$), and $d\theta_p/dt$ is angular velocity of the steering column 310 (hereinafter referred to as column angular velocity $d\theta_p/dt$).

Also, $T_d$ is driver torque applied to the steering wheel 2 by the driver, $k_{tb}$ is stiffness of the torsion bar 10 (hereinafter referred to as the torsion bar stiffness $k_{tb}$), $T_{tb}$ is the steering torque (torsion bar torque), N is the reduction ratio of the speed reducer 19, and $N \cdot T_m$ is a driving torque $N \cdot T_m$ that is equivalent to the output shaft torque command value $N \cdot T_m$. The steering torque $T_{tb}$ is $T_{tb} = k_{tb}(\theta_{sw} - \theta_p)$.

In this two-inertia model 301, driver torque $T_d$ is applied to the steering wheel 2 by the driver, and also $-T_{tb}$, which is the sign-inverted value of the steering torque $T_{tb}$, is applied from the torsion bar 10. The driving torque $N \cdot T_m$ is applied to the steering column 310 from the electric motor 18. However, when the integrated angle command value $\theta_{sin}$ following low-pass filter processing is 0 degrees, then $N \cdot T_m = (-K_p \cdot \theta_p - K_d \cdot d\theta_p/dt + G_p \cdot T_{tb} + G_d \cdot dT_{tb}/dt)$ holds.

Note that when load compensation is not performed, the steering torque $T_{tb}$ and the road load torque $T_{rl}$ are applied to the steering column 310 in addition to the driving torque $N \cdot T_m$.

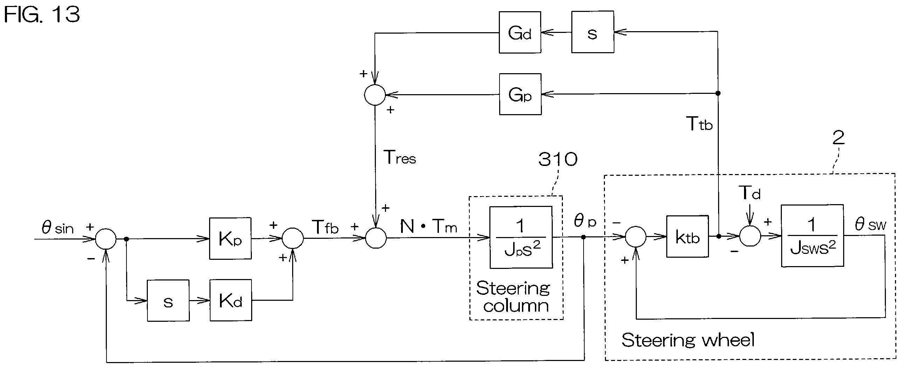

FIG. 13 is a control block diagram of a feedback control system of the electric power steering system 1 in automatic steering mode or in cooperative steering mode, and is a block diagram representing a model of a column and a steering wheel that are objects of control. Here, FIG. 13 is a block diagram corresponding to FIG. 12 and Expressions (10a) and (10b) described later.

The feedback control torque $T_{fb}$ is generated by PD control with respect to deviation between the integrated angle command value $\theta_{sin}$ following low-pass filter processing and the column angle $\theta_\rho$ (actual steering angle $\theta$). Note that in the present embodiment, the proportional gain $K_p$ and the differential gain $K_d$ each include the column inertia $J_p$, which will be described later.

A resonance control torque $T_{res}$ ($= G_d \cdot dT_{tb}/dt + G_p \cdot T_{tb}$) is added to the feedback control torque $T_{tb}$. This added value ($T_{fb} + G_d \cdot dT_{tb}/dt + G_p \cdot T_{tb}$) is equivalent to the output shaft torque command value $N \cdot T_m$ corresponding to a value obtained by multiplying the angular acceleration of the column angle $\theta_\rho$ (hereinafter referred to as column angular acceleration $d^2\theta_p/dt^2$) by the column inertia $J_p$. A driving torque corresponding to this output shaft torque command value $N \cdot T_m$ is applied from the electric motor 18 to the steering column 310. When the driving torque $N \cdot T_m$ is input to the steering column 310 having inertia that is $J_p$, the steering column 310 rotates, and of the rotational angle (column angle $\theta_p$) is measured based on the rotational angle sensor 23, and feedback thereof is performed.

Here, the steering torque $T_{tb}$ is equivalent to a value obtained by multiplying difference between the column angle $\theta_\rho$ and the wheel angle $\theta_{sw}$ ($\theta_{sw} - \theta_p$) by the torsion bar stiffness $k_{tb}$, and $T_{tb} = k_{tb} (\theta_{sw} - \theta_p)$ holds. The sum of a value $G_d \cdot dT_{tb}/dt$ obtained by multiplying the differential value of this steering torque $T_{tb}$ by the first gain $G_d$, and a value $G_p \cdot T_{tb}$ obtained by multiplying this steering torque $T_{tb}$ by the second gain $G_p$, is fed back as resonance control torque $T_{res}$. Also, when the steering torque $T_{tb}$ and the driver torque $T_d$ are input to the steering wheel 2, having inertia that is $J_{sw}$, the steering wheel 2 rotates thereby.

In the two-inertia model 301 of FIG. 12, the equation of motion on the steering column side is expressed by the following Expression (10a), and the equation of motion on the steering wheel side is expressed as the following Expression (10b).

[Math 10]

$$J_p \ddot{\theta}_p = - K_p \theta_p - K_d \dot{\theta}_p + G_p T_{tb} + G_d \dot{T}_{tb} \quad \cdots (10a)$$

$$J_{sw} \ddot{\theta}_{sw} = T_d - T_{tb} \quad \cdots (10b)$$

In the two-inertia model 301 in FIG. 12, when the proportional gain $K_p$, the differential gain $K_d$, the second gain $G_p$, and the first gain $G_d$, are respectively set to values such as in the following Expressions (11a), (11b), (11c), and (11d), for example, a transfer function $G$ ($N \cdot T_m \rightarrow \theta_p$) from the driving torque $N \cdot T_m$ to the column angle $\theta_\rho$ is expressed by the following Expression (12a), and a transfer function $G$ ($N \cdot T_m \rightarrow \theta_{sw}$) from the driving torque $N \cdot T_m$ to the wheel angle $\theta_{sw}$ is expressed by the following Expression (12b).

[Math 11]

$$K_p = J_p * \frac{\omega^4}{\omega_{sw}^2} \quad \cdots (11a)$$

$$K_d = J_p * \frac{4\xi\omega^3}{\omega_{sw}^2} \quad \cdots (11b)$$

$$G_p = J_p * \left\{ \omega^2 \left( 4\xi^2 + 2 - \frac{\omega^2}{\omega_{sw}^2} \right) - \omega_{sw}^2 \right\} / k_{tb} \quad \cdots (11c)$$

$$G_d = J_p * 4\xi\omega \left( 1 - \frac{\omega^2}{\omega_{sw}^2} \right) / k_{tb} \quad \cdots (11d)$$

[Math 12]

$$G\left(N\cdot T_m \rightarrow \theta_p\right) = \frac{s^2 + \omega_{sw}^2}{J_p\left(s^2 + 2\zeta\omega s + \omega^2\right)^2} \quad \cdots (12a)$$

$$G\left(N\cdot T_m \rightarrow \theta_{sw}\right) = \frac{\omega_{sw}^2}{J_p\left(s^2 + 2\zeta\omega s + \omega^2\right)^2} \quad \cdots (12b)$$

In Expressions (11a) to (11d) and Expressions (12a) and (12b), $\omega_{sw}$ is the natural frequency (resonant frequency) of the steering wheel 2 determined by the mechanical characteristics of the steering wheel 2. Also, $\omega$ is a variable that represents the resonant frequency of the system.

In the two-inertia model 301 in FIG. 12, i.e., in the first embodiment, respectively setting the proportional gain $K_p$, the differential gain $K_d$, the second gain $G_p$, and the first gain $G_d$, to values such as those in the above Expressions (11a), (11b), (11c), and (11d), for example, enables the resonant frequency $\omega$ and the damping ratio $\zeta$ to be optionally set.

In the first embodiment, the resonant frequency $\omega$ and damping characteristics can be optionally set, and accordingly the responsivity can be changed. Specifically, the greater a value the resonant frequency $\omega$ is set to, the faster the responsivity becomes.

In the first embodiment, load compensation is performed, but load compensation does not necessarily have to be performed. In this case, a value $(T_{fb} + G_d\cdot dT_{tb}/dt + G_p\cdot T_{tb})$, obtained by adding the resonance control torque $T_{res}$ (= $G_d\cdot dT_{tb}/dt + G_p\cdot T_{tb}$) to the feedback control torque (basic torque command value) $T_{fb}$ becomes the integrated steering torque command value $T_{sint}$.

When there is no load compensation, the steering torque $T_{tb}$ is conceivably being fed back to the steering column 310 in advance, and accordingly with the second gain when there is no load compensation as $G_p{'}$, and with the second gain when there is load compensation as $G_p$, $G_p{'} = (G_p - 1)$ is set.

Also, in the first embodiment described above, switching can be performed among the cooperative steering mode in which the electric motor 18 can be controlled based on the integrated angle command value $\theta_{sint}$, the manual steering mode in which the electric motor 18 can be controlled based only on the assist torque command value $T_{as}$, and the automatic steering mode in which the electric motor 18 can be controlled based only on the automatic steering command value $\theta_{adac}$.

That is to say, in the electric power steering system 1 that can control the electric motor 18 based on the integrated angle command value $\theta_{sint}$, the electric motor 18 can be controlled based only on the assist torque command value $T_{as}$.

Also, in the first embodiment described above, in the manual steering mode, the electric motor 18 is controlled based only on the assist torque command value $T_{as}$, and accordingly the driver can receive the actual road load torque (road reaction torque).

Also, in the first embodiment described above, the basic torque command value $(T_{fb})$ is computed based on the integrated angle command value $\theta_{sint}$, and the basic torque command value $(T_{fb})$ is corrected by the disturbance torque estimation value $^\wedge T_{lc}$ computed by the disturbance torque estimation unit 66. That is to say, in the first embodiment described above, the nonlinear disturbance torque (torque other than the motor torque) that occurs as a disturbance in the output shaft 9 is compensated for (load compensation). Accordingly, the effects of disturbance torque on the angle control performance can be suppressed. Thus, highly precise angle control can be realized.

In the following, an electric power steering system including an angle control unit having a function of performing load compensation and also receiving $K_R\cdot T_{tb}$ as feedback, as described in Patent Document 1, will be referred to as a conventional example. In the conventional example, $K_R$ is vibration suppression gain, and $K_R\cdot T_{tb}$ is vibration suppression torque. In the conventional example, the angle control unit is provided with a feedback control unit and a feedforward control unit, but an assumption will be made that the feedforward control unit is not provided, in order to simplify description.

In the conventional example, in the angle control unit, a value obtained by subtracting the disturbance torque estimation value $^\wedge T_{lc}$ from a value obtained by adding the vibration suppression torque $K_R\cdot T_{tb}$ to the feedback control torque $T_{fb}$ (= $T_{fb} + K_R\cdot T_{tb} - ^\wedge T_{lc}$) becomes the output shaft torque command value $N\cdot T_m$.

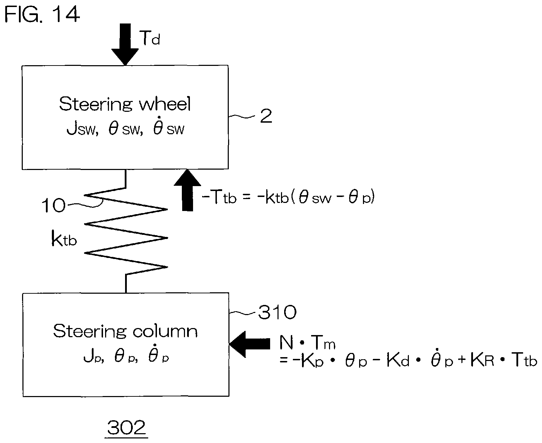

FIG. 14 is a schematic diagram illustrating a two-inertia model 302 corresponding to the conventional example,

In the two-inertia model 302 in FIG. 14, the equation of motion on the steering column side is expressed by the following Expression (13a), and the equation of motion on the steering wheel side is expressed by the following Expression (13b).

[Math 13]

$$J_p \ddot{\theta}_p = - K_p \theta_p - K_d \dot{\theta}_p + K_R T_{tb} \quad \cdots (13a)$$

$$J_{sw} \ddot{\theta}_{sw} = T_d - T_{tb} \quad \cdots (13b)$$

In this two-inertia model 302, driver torque $T_d$ is applied to the steering wheel 2 by the driver, and also s-$T_{tb}$, which is the sign-inverted value of the steering torque $T_{tb}$, is applied from the torsion bar 10. The driving torque $N \cdot T_m$ is applied to the steering column 310 from the electric motor 18. Note, however, that assuming the angle command value given to the feedback control unit to be 0 degrees, $N \cdot T_m = (-K_p \cdot \theta_p - K_d \cdot d\theta_p/dt + K_R \cdot T_{tb})$ holds. $K_p$ is proportional gain in the conventional example, and $K_d$ is differential gain in the conventional example,

In the two-inertia model 302 in FIG. 14, when the proportional gain $K_p$, the differential gain $K_d$, and the vibration suppression gain $K_p$, are set to values such as in the following Expressions (14a), (14b), and (14c), a transfer function G ($N \cdot T_m \rightarrow \theta_p$) from the driving torque $N \cdot T_m$ to the column angle $\theta_\rho$ is expressed by the following Expression (15a), and a transfer function G ($N \cdot T_m \rightarrow \theta_{sw}$) from the driving torque $N \cdot T_m N \cdot T_m$ to the wheel angle $\theta_{sw}$ is expressed by the following Expression (15b).

[Math 14]

$$K_p = J_p * \omega_{sw}^2 \quad \cdots (14a)$$

$$K_d = J_p * 4 \omega_{sw} \quad \cdots (14b)$$

$$K_R = J_p * 4/J_{sw} \quad \cdots (14c)$$

[Math 15]

$$G (N \cdot T_m \rightarrow \theta_p) = \frac{s^2 + \omega_{sw}^2}{J_p (s + \omega_{sw})^4} \quad \cdots (15a)$$

$$G (N \cdot T_m \rightarrow \theta_{sw}) = \frac{\omega_{sw}^2}{J_p (s + \omega_{sw})^4} \quad \cdots (15b)$$

In the two-inertia model 302 in FIG. 14, when the proportional gain $K_p$, the differential gain $K_d$ and the vibration suppression gain $K_R$ are respectively set as in the above Expressions (14a), (14b), and (14c), the column angle $\theta_\rho$ and the wheel angle $\theta_{sw}$ both exhibit critical damping ($\zeta = 1$), and vibration can be suppressed. However, in the two-inertia model 302 of FIG. 14, the resonant frequency is fixed at $\omega_{sw}$. In other words, in the conventional example, the resonant frequency and damping characteristics cannot be set optionally.

[Second Embodiment]

Next, an electric power steering system to which a motor control device according to a second embodiment of the present invention is applied (hereinafter, referred to as "electric power steering system according to second embodiment") will be described.

In the electric power steering system according to the second embodiment, a configuration of a motor control ECU 202A is different from the configuration of the motor control ECU 202 in FIG. 2. In the electric power steering system according to the second embodiment, the automatic steering command value $\theta_{adac}$ and the mode setting signals S1, S2, S3 are not given from the host ECU 201 (see FIG. 1) to the motor control ECU 202A.

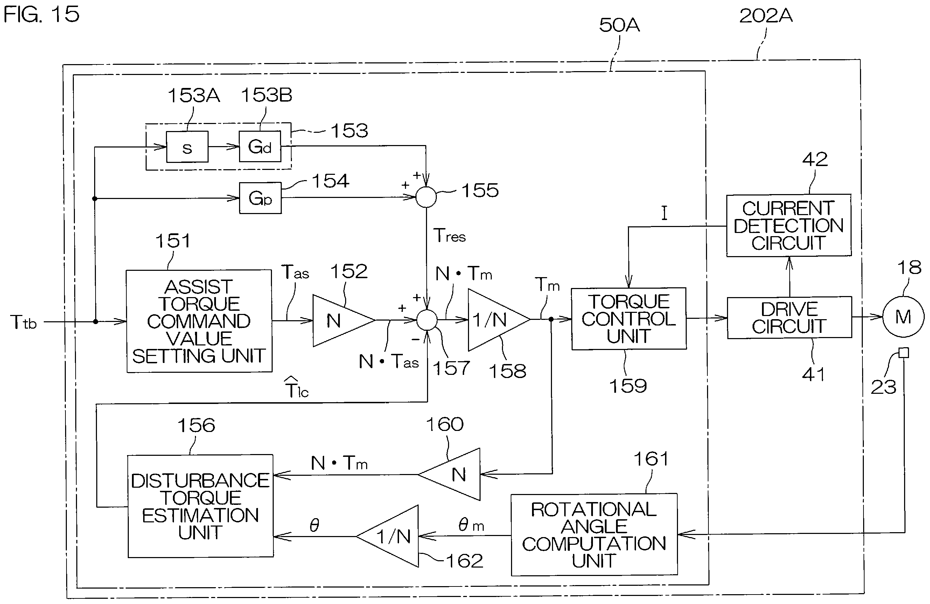

FIG. 15 is a block diagram illustrating the configuration of the motor control ECU 202A used in the electric power steering system according to the second embodiment.

The motor control ECU 202A includes a microcomputer 50A, the drive circuit (inverter circuit) 41 that is controlled by the microcomputer 50A and that supplies electric power to the electric motor 18, and the current detection circuit 42 that detects a current flowing through the electric motor 18 (hereinafter referred to as "motor current I").

The microcomputer 50A includes a CPU and memory (such as ROM, RAM, non-volatile memory, and so forth), and functions as a plurality of functional processing units by executing a predetermined program. The plurality of functional processing units include an assist torque command value setting unit 151, a first reduction ratio multiplication unit 152, a first torque computation unit 153, a second torque computation unit 154, a first torque addition unit 155, a disturbance torque estimation unit 156, a second torque addition unit 157, a first reduction ratio division unit 158, a torque control unit 159, a second reduction ratio multiplication unit 160, a rotational angle computation unit 161, and a second reduction ratio division unit 162.

The second reduction ratio multiplication unit 160 multiplies the motor torque command value $T_m$ computed by the first reduction ratio division unit 158 by the reduction ratio N of the speed reducer 19, to convert the motor torque command value $T_m$ into the output shaft torque command value $N \cdot T_m$ that acts on the output shaft 9.

The rotational angle computation unit 161 computes the rotor rotational angle $\theta_m$ of the electric motor 18 based on the output signal from the rotational angle sensor 23. The second reduction ratio division unit 162 converts the rotor rotational angle $\theta_m$ computed by the rotational angle computation unit 161 into the rotational angle (actual steering angle) $\theta$ of the output shaft 9 by dividing the rotor rotational angle $\theta_m$ by the speed reduction ratio N.

The assist torque command value setting unit 151 sets the assist torque command value $T_{as}$ that is a target value of the assist torque necessary for manual operations. Actions of the assist torque command value setting unit 151 are similar to those of the assist torque command value setting unit 51 in FIG. 2, and accordingly detailed description thereof will be omitted.

The first reduction ratio multiplication unit 152 multiplies the assist torque command value $T_{as}$ set by the assist torque command value setting unit 151 by the reduction ratio N, to convert the assist torque command value $T_{as}$ for the electric motor 18 into an assist torque command value $N \cdot T_{as}$ for the output shaft 9. The assist torque command value $T_{as}$ is given to the second torque addition unit 157.

The first torque computation unit 153 includes a differential computation unit 153A and a first gain multiplication unit 153B. The differential computation unit 153A computes the time differential value $dT_{tb}/dt$ of the steering torque $T_{tb}$. The first gain multiplication unit 153B computes a first torque $G_d \cdot dT_{tb}/dt$ by multiplying the differential value $dT_{tb}/dt$ computed by the differential computation unit 153A by the first gain $G_d$.

The second torque computation unit 154 computes a second torque $G_p \cdot T_{tb}$ by multiplying the steering torque $T_{tb}$ by the second gain $G_p$.

The first torque addition unit 155 adds the first torque $G_d \cdot dT_{tb}/dt$ and the second torque $G_p \cdot T_{tb}$ to compute the resonance control torque $T_{res}$ ($= G_d \cdot dT_{tb}/dt + G_p \cdot T_{tb}$). The resonance control torque $T_{res}$ is given to the second torque addition unit 157.

A disturbance torque estimation unit 156 estimates the disturbance torque (disturbance load) $T_{lc}$, the steering angle $\theta$, and the steering angle differential value (angular velocity) $d\theta/dt$, based on the output shaft torque command value $N \cdot T_m$ and the actual steering angle $\theta$. The estimated values of the disturbance torque $T_{lc}$, the steering angle $\theta$, and the steering angle differential value (angular velocity) $d\theta/dt$ are represented by $^\wedge T_{lc}$, $^\wedge\theta$, and $d^\wedge\theta/dt$, respectively. The configuration and actions of the disturbance torque estimation unit 156 are similar to those of the disturbance torque estimation unit 66 in FIG. 5, and accordingly detailed description thereof will be omitted.

The disturbance torque estimation value $^\wedge T_{lc}$ computed by the disturbance torque estimation unit 156 is given to the second torque addition unit 157 as a disturbance torque compensation value.

The second torque addition unit 157 computes the output shaft torque command value $N \cdot T_m$ ($= N \cdot T_{as} + Gd \cdot dT_{tb}/dt + G_p \cdot T_{tb} - {}^\wedge T_{lc}$) by subtracting the disturbance torque estimation value $^\wedge T_{lc}$ from a value obtained by adding the resonance control torque $T_{res}$ to the assist torque command value $N \cdot T_{as}$.

The output shaft torque command value $N \cdot T_m$ is given to the first reduction ratio division unit 158. The first reduction ratio division unit 158 computes the motor torque command value $T_m$ by dividing the output shaft torque command value $N \cdot T_m$ by the reduction ratio N. This motor torque command value $T_m$ is given to the torque control unit 159.

The torque control unit 159 drives the drive circuit 41 such that the motor torque of the electric motor 18 is brought closer the motor torque command value $T_m$. The configuration and actions of the torque control unit 159 are similar to those of the torque control unit 55 in FIG. 2, and accordingly detailed description thereof will be omitted.

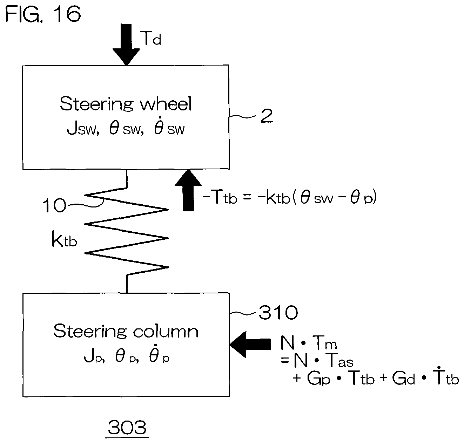

FIG. 16 is a schematic diagram illustrating a two-inertia model 303 corresponding to the electric power steering system including the motor control ECU 202A illustrated in FIG. 15.

In this two-inertia model 303, driver torque $T_d$ is applied to the steering wheel 2 by the driver, and also $-T_{tb}$, which is the sign-inverted value of the steering torque $T_{tb}$, is applied from the torsion bar 10. Driving torque $N \cdot T_m$ equivalent to the output shaft torque command value $N \cdot T_m$ is applied from the electric motor 18 to the steering column 310. Note that $N \cdot T_m =$

$(N \cdot T_{as} + G_d \cdot dT_{tb}/dt + G_p \cdot T_{tb})$ holds.

In the two-inertia model 303 in FIG. 16, the equation of motion on the steering column side is expressed by the following Expression (16a), and the equation of motion on the steering wheel side is expressed by the following Expression (16b).

[Math 16]

$$J_p \ddot{\theta}_p = G_p T_{tb} + G_d \dot{T}_{tb} + N \cdot T_{as} \quad \cdots (16a)$$

$$J_{sw} \ddot{\theta}_{sw} = T_d - T_{tb} \quad \cdots (16b)$$

In the two-inertia model 303 in FIG. 16, when the second gain $G_p$ and the first gain $G_d$, are respectively set to values such as in the following Expressions (17a) and (17b), for example, a transfer function $G(N \cdot T_m \to \theta_p)$ from the driving torque $N \cdot T_m$ to the column angle $\theta_p$ is expressed by the following Expression (18a), and a transfer function $G(N \cdot T_m \to \theta_{sw})$ from the driving torque $N \cdot T_m$ to the wheel angle $\theta_{sw}$ is expressed by the following Expression (18b).

[Math 17]

$$G_p = J_p * \frac{\omega^2 - \omega_{sw}^2}{k_{tb}} \quad \cdots (17a)$$

$$G_d = J_p * \frac{2\xi\omega}{k_{tb}} \quad \cdots (17b)$$

[Math 18]

$$G(N \cdot T_m \to \theta_p) = \frac{s^2 + \omega_{sw}^2}{J_p s^2 (s^2 + 2\xi\omega s + \omega^2)} \quad \cdots (18a)$$

$$G(N \cdot T_m \to \theta_{sw}) = \frac{\omega_{sw}^2}{J_p s^2 (s^2 + 2\xi\omega s + \omega^2)} \quad \cdots (18b)$$

In the two-inertia model 303 of FIG. 16, i.e., in the present modification, when the second gain $G_p$ and the first gain $G_d$ are respectively set as in the above Expressions (17a) and (17b), for example, the resonant frequency $\omega$ and the damping ratio $\zeta$ can be optionally set.

In the second embodiment, the resonant frequency $\omega$ and damping characteristics can be optionally set, and accordingly the responsivity can be changed. Specifically, the greater a value the resonant frequency $\omega$ is set to, the faster the responsivity becomes.

In the second embodiment, load compensation is performed, but load compensation does not necessarily have to be performed. In this case, the second torque addition unit 157 computes the output shaft torque command value $N \cdot T_m$ (= $N \cdot T_{as} + G_d \cdot dT_{tb}/dt + G_p \cdot T_{tb}$) by adding the resonance control torque $T_{res}$ to the assist torque command value $N \cdot T_{as}$.

When there is no load compensation, the steering torque $T_{tb}$ is conceivably being fed back to the steering column 310 in advance, and accordingly with the second gain when there is no load compensation as $G_p{}'$, and with the second gain when there is load compensation as $G_p$, $G_p{}' = (G_p - 1)$ is set.

[Third Embodiment]

Next, an electric power steering system to which a motor control device according to a third embodiment of the present invention is applied (hereinafter, referred to as "electric power steering system according to third embodiment") will be described.

The electric power steering system according to the third embodiment has the same overall configuration as that illustrated in FIG. 1. In the electric power steering system according to the third embodiment, the configuration of the motor control ECU 202 is similar to the configuration of the motor control ECU 202 in FIG. 2, but the configuration of the angle control unit 54 in the motor control ECU 202 in FIG. 2 is different. The configurations 51 to 53 and 55 to 59 in FIG. 2, other than the angle control unit 54, are the same in the electric power steering system according to the third embodiment.

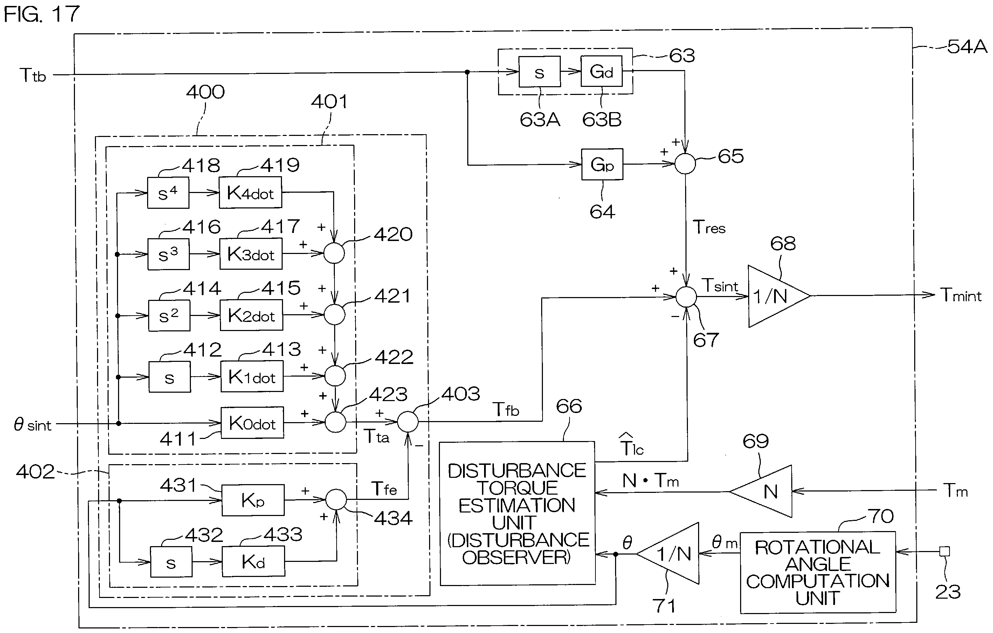

FIG. 17 is a block diagram illustrating a configuration of an angle control unit 54A used in the motor control ECU 202 in the electric power steering system according to the third embodiment. In FIG. 17, portions corresponding to those in FIG. 5 described above are denoted by the same signs as those in FIG. 5.

The angle control unit 54A in FIG. 17 computes an integrated motor torque command value $T_{mint}$ based on the integrated angle command value $\theta_{sint}$, the steering torque $T_{tb}$, and the output signal of the rotational angle sensor 23. The angle control unit 54A in FIG. 17 differs in comparison with the angle control unit 54 in FIG. 5 in that the low-pass filter (LPF) 61 in FIG. 5 is not provided, and that a configuration of a feedback control unit 400 is different from the configuration of the feedback control unit 62 in FIG. 5.

The actions of the first torque computation unit 63, the second torque computation unit 64, the first torque addition unit 65, the disturbance torque estimation unit 66, the first reduction ratio division unit 68, the reduction ratio multiplication unit 69, the rotational angle computation unit 70, and the second reduction ratio division unit 71 in FIG. 17 are the same as the actions of the corresponding units in FIG. 5, and accordingly description thereof will be omitted.

The feedback control unit 400 includes a target torque computation unit 401, a feedback torque computation unit 402, and a torque deviation computation unit 403.

The target torque computation unit 401 computes a target torque $T_{ta}$ by performing predetermined computation on the integrated angle command value $\theta_{sint}$ computed by the integrated angle command value computation unit 53 (see FIG. 2).

The target torque computation unit 401 includes a proportional gain multiplication unit 411, a first-order differential computation unit 412, a first-order differential gain multiplication unit 413, a second-order differential computation unit 414, a second-order differential gain multiplication unit 415, a third-order differential computation unit 416, a third-order differential gain multiplication unit 417, a fourth-order differential computation unit 418, a fourth-order differential gain multiplication unit 419, and first to fourth addition units 420 to 423.

The proportional gain multiplication unit 411 multiplies the integrated angle command value $\theta_{sint}$ by a proportional gain $K_{0dot}$.

The first-order differential computation unit 412 computes a first-order differential value $d\theta_{sint}/dt$ of the integrated angle command value $\theta_{sint}$. The first-order differential gain multiplication unit 413 multiplies the first-order differential value $d\theta_{sint}/dt$ computed by the first-order differential computation unit 412 by a first-order differential gain $K_{1dot}$.

The second-order differential computation unit 414 computes a second-order differential value $d^2\theta_{sint}/dt^2$ of the integrated angle command value $\theta_{sint}$. The second-order differential gain multiplication unit 415 multiplies the second-order differential value $d^2\theta_{sint}/dt^2$ computed by the second-order differential computation unit 414 by a second-order differential gain $K_{2dot}$.

The third-order differential computation unit 416 computes a third-order differential value $d^3\theta_{sint}/dt^3$ of the integrated angle command value $\theta_{sint}$. The third-order differential gain multiplication unit 417 multiplies the third-order differential value $d^3\theta_{sint}/dt^3$ computed by the third-order differential computation unit 416 by a third-order differential gain $K_{3dot}$.

The fourth-order differential computation unit 418 computes a fourth-order differential value $d^4\theta_{sint}/dt^4$ of the integrated angle command value $\theta_{sint}$. The fourth-order differential gain multiplication unit 419 multiplies the fourth-order differential value $d^4\theta_{sint}/dt^4$ computed by the fourth-order differential computation unit 418 by a fourth-order differential gain $K_{4dot}$.

The first addition unit 420 adds a multiplication result $K_{4dot} \cdot d^4\theta_{sint}/dt^4$ of the fourth-order differential gain multiplication unit 419 and a multiplication result $K_{3dot} \cdot d^3\theta_{sint}/dt^3$ of the third-order differential gain multiplication unit 417.

The second addition unit 421 adds the addition result of the first addition unit 420 ($K_{3dot} \cdot d^3\theta_{sint}/dt^3 + K_{4dot} \cdot d^4\theta_{sint}/dt^4$) and the multiplication result $K_{2dot} \cdot d^2\theta_{sint}/dt^2$ of the second-order differential gain multiplication unit 415.

The third addition unit 422 adds the addition result of the second addition unit 421 ($K_{2dot} \cdot d^2\theta_{sint}/dt^2 + K_{3dot} \cdot d^3\theta_{sint}/dt^3 + K_{4dot} \cdot d^4\theta_{sint}/dt^4$) and the multiplication result $K_{1dot} \cdot d\theta_{sint}/dt$ of the first-order differential gain multiplication unit 413.

The fourth addition unit 423 adds the addition result of the third addition unit 422 ($K_{1dot} \cdot \theta_{sint}/dt + K_{2dot} \cdot d^2\theta_{sint}/dt^2 + K_{3dot} \cdot d^3\theta_{sint}/dt^3 + K_{4dot} \cdot d^4\theta_{sint}/dt^4$) and the multiplication result $K_{0dot} \cdot \theta_{sint}$ of the proportional gain multiplication unit 411, thereby computing the target torque $T_{ta}$. The target torque $T_{ta}$ is expressed as ($K_{0dot} \cdot \theta_{sint} + (K_{1dot} \cdot \theta_{sint}/dt + K_{2dot} \cdot d^2\theta_{sint}/dt^2 + K_{3dot} \cdot d^3\theta_{sint}/dt^3 + K_{4dot} \cdot d^4\theta_{sint}/dt^4$).

The feedback torque computation unit 402 computes feedback torque $T_{fe}$ by performing predetermined computation with respect to the actual steering angle $\theta$.

The feedback torque computation unit 402 includes a proportional gain multiplication unit 431, a differential computation unit 432, a differential gain multiplication unit 433, and an addition unit 434. The proportional gain multiplication unit 431 multiplies the actual steering angle $\theta$ computed by the second reduction ratio division unit 71 by the proportional gain $K_p$.

The differential computation unit 432 computes a time differential value $d\theta/dt$ of the actual steering angle $\theta$. The differential gain multiplication unit 433 multiplies the differential value $d\theta/dt$ computed by the differential computation unit 432 by the differential gain $K_d$. The addition unit 434 adds the multiplication result $K_p \cdot \theta$ of the proportional gain multiplication unit 431 and the multiplication result $d\theta/dt$ of the differential gain multiplication unit 433, thereby computing feedback control torque $T_{fe}$. The feedback torque $T_{fe}$ is ($K_p \cdot \theta + K_d \cdot d\theta/dt$).

Note that in FIG. 17, the actual steering angle $\theta$ computed by the second reduction ratio division unit 71 is input to the feedback torque computation unit 402. However, the steering angle estimation value $\wedge\theta$ computed by the disturbance torque estimation unit 66 may be input to the feedback torque computation unit 402 instead of the actual steering angle $\theta$. In this case, the feedback torque $T_{fe}$ is ($K_p \cdot \wedge\theta + K_d \cdot d\wedge\theta/dt$).

The torque deviation computation unit 403 computes the feedback control torque $T_{fb}$ by subtracting the feedback torque $T_{fe}$ from the target torque $T_{ta}$. The feedback control torque $T_{fb}$ is a control torque for bringing the actual steering angle $\theta$ closer to the integrated angle command value $\theta_{sint}$. In this embodiment, the feedback control torque $T_{fb}$ is an example of "basic torque command value" according to the present invention.

The second torque addition unit 67 subtracts the disturbance torque estimation value $\wedge T_{lc}$ from a value obtained by adding the resonance control torque $T_{res}$ to the feedback control torque (basic torque command value) $T_{tb}$, thereby computing an integrated steering torque command value $T_{sint}$ (= $T_{fb} + G_d \cdot dT_{tb}/dt + G_p \cdot T_{tb} - \wedge T_{lc}$).

The integrated steering torque command value $T_{sint}$ is given to the first reduction ratio division unit 68. The first reduction ratio division unit 68 computes the integrated motor torque command value $T_{mint}$ by dividing the integrated steering torque command value $T_{sint}$ by the reduction ratio N. This integrated motor torque command value $T_{mint}$ is given to the second weighting unit 57 (see FIG. 2).

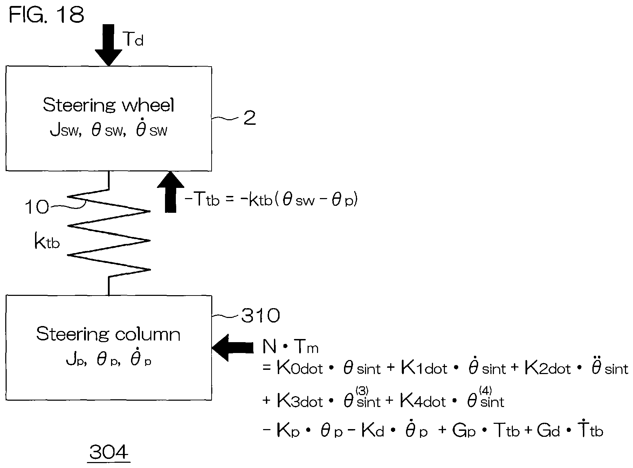

FIG. 18 is a schematic diagram illustrating a two-inertia model 304 corresponding to the electric power steering system according to the third embodiment in automatic steering mode or in cooperative steering mode.

In this two-inertia model 304, the driver torque $T_d$ is applied to the steering wheel 2 by the driver, and also $-T_{tb}$, which is the sign-inverted value of the steering torque $T_{tb}$, is applied from the torsion bar 10. The driving torque $N \cdot T_m$ is applied to the steering column 310 from the electric motor 18. The driving torque $N \cdot T_m$ is $N \cdot T_m = (K_{0dot} \cdot \theta_{sint} + K_{1dot} \cdot d\theta_{sint}/dt + K_{2dot} \cdot d^2\theta_{sint}/d^2 + K_{3dot} \cdot d^3\theta_{sint}/dt^3 + K_{4dot} \cdot d^4\theta_{sint}/dt^4 - K_p \cdot \theta_p - d\theta_p/dt + G_p \cdot T_{tb} + G_d \cdot dT_{tb}/dt)$.

Note that when load compensation is not performed, the steering torque $T_{tb}$ and the road load torque $T_{rl}$ are applied to the steering column 310 in addition to the driving torque $N \cdot T_m$.

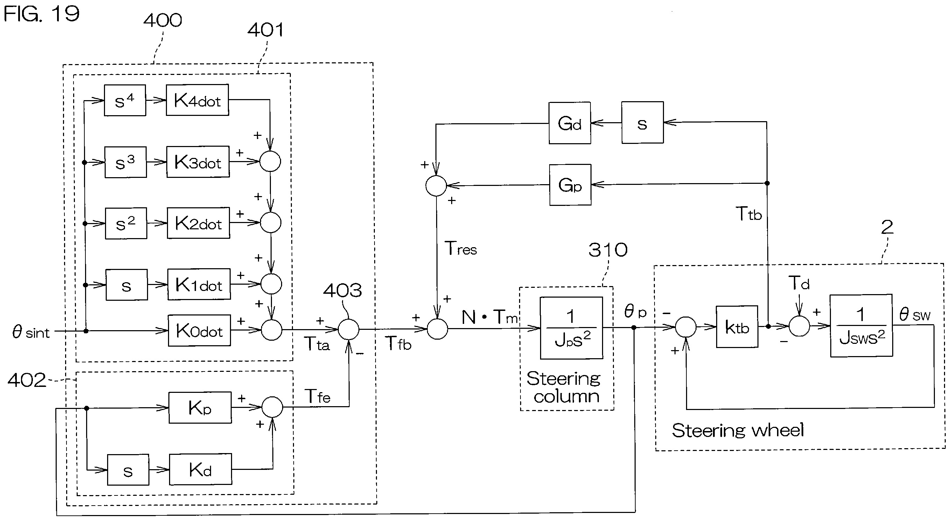

FIG. 19 is a control block diagram of a feedback control system of the electric power steering system according to the third embodiment in automatic steering mode or in cooperative steering mode, and is a block diagram representing a model of the column and the steering wheel that are objects of control. Here, FIG. 19 is a block diagram corresponding to FIG. 18 and Expressions (19a) and (19b) described later.

The feedback torque $T_{fe}$ computed by the feedback torque computation unit 402 based on the first column angle $\theta_p$ (actual steering angle $\theta$), is subtracted from the target torque $T_{ta}$ computed by the target torque computation unit 401 based on the integrated angle command value $\theta_{sint}$, thereby generating the feedback control torque $T_{fb}$ (= $T_{ta} - T_{fe}$). Note that in the present embodiment, the proportional gain $K_p$ and the differential gain $K_d$ each include the column inertia $J_p$, which will be described later. Also, when the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set to significant values other than zero, column inertia $J_p$ is included.

The resonance control torque $T_{res}$ (= $G_d \cdot dT_{tb}/dt + G_p \cdot T_{tb}$) is added to the feedback control torque $T_{tb}$. This added value ($T_{fb} + G_d \cdot dT_{tb}/dt + G_p \cdot T_{tb}$) is equivalent to the output shaft torque command value $N \cdot T_m$ corresponding to a value obtained by multiplying the angular acceleration of the column angle $\theta_\rho$ (hereinafter referred to as column angular acceleration $d^2\theta_p/dt^2$) by the column inertia $J_p$. A driving torque corresponding to this output shaft torque command value $N \cdot T_m$ is applied from the electric motor 18 to the steering column 310. When the driving torque $N \cdot T_m$ is input to the steering column 310 having inertia that is $J_p$, the steering column 310 rotates, and of the rotational angle (column angle $\theta_p$) is measured based on the rotational angle sensor 23, and feedback thereof is performed.

Here, the steering torque $T_{tb}$ is equivalent to a value obtained by multiplying difference between the column angle $\theta_\rho$ and the wheel angle $\theta_{sw}$ ($\theta_{sw} - \theta_p$) by the torsion bar stiffness $k_{tb}$, and $T_{tb} = k_{tb} (\theta_{sw} - \theta_p)$ holds. The sum of a value $G_d \cdot dT_{tb}/dt$ obtained by multiplying the differential value of this steering torque $T_{tb}$ by the first gain $G_d$, and a value $G_p \cdot T_{tb}$ obtained by multiplying this steering torque $T_{tb}$ by the second gain $G_p$, is fed back as resonance control torque $T_{res}$. Also, when the steering torque $T_{tb}$ and the driver torque $T_d$ are input to the steering wheel 2, having inertia that is $J_{sw}$, the steering wheel 2 rotates thereby.

In the two-inertia model 304 in FIG. 18, the equation of motion on the steering column side is expressed by the following Expression (19a), and the equation of motion on the steering wheel side is expressed by the following Expression (19b).

[Math 19]

$$J_p \ddot{\theta}_p = K_{0dot} \cdot \theta_{sint} + K_{1dot} \cdot \dot{\theta}_{sint} + K_{2dot} \cdot \ddot{\theta}_{sint} + K_{3dot} \cdot \theta_{sint}^{(3)} + K_{4dot} \cdot \theta_{sint}^{(4)}$$
$$- K_p \cdot \theta_p - K_d \cdot \dot{\theta}_p + G_p \cdot T_{tb} + G_d \cdot \dot{T}_{tb} \qquad \cdots (19a)$$

$$J_{sw} \ddot{\theta}_{sw} = T_d - T_{tb} \qquad \cdots (19b)$$

In the two-inertia model 304 of FIG. 18, when the proportional gain $K_p$, the differential gain $K_d$, the second gain $G_p$, and the first gain $G_d$ are respectively set to values such as those shown in the above Expressions (11a), (a11), (11c) and (11d), for example, the transfer function $G(\theta_{sint} \to \theta_p)$ from the integrated angle command value $\theta_{sint}$ to the column angle $\theta_p$ is expressed by the following Expression (20a), and the transfer function $G(\theta_{sint} \to \theta_{sw})$ from the integrated angle command value $\theta_{sint}$ to the wheel angle $\theta_{sw}$ is expressed by the following Expression (20b).

[Math 20]

$$G(\theta_{sint} \to \theta_p) = \frac{(s^2 + \omega_{sw}^2)(K_{4dot}s^4 + K_{3dot}s^3 + K_{2dot}s^2 + K_{1dot}s + K_{0dot})}{J_p(s^2 + 2\zeta\omega s + \omega^2)^2}$$
$$\cdots (20a)$$

$$G(\theta_{sint} \to \theta_{sw}) = \frac{\omega_{sw}^2(K_{4dot}s^4 + K_{3dot}s^3 + K_{2dot}s^2 + K_{1dot}s + K_{0dot})}{J_p(s^2 + 2\zeta\omega s + \omega^2)^2}$$
$$\cdots (20b)$$

When the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set to values as in the following Expression (21), for example, the configuration of the feedback control unit 400 in FIG. 17 becomes equivalent to the feedback control unit 62 in FIG. 5. However, the angle command value $\theta_{sint}$ input to the feedback control unit 400 in FIG. 17 is different from the angle command value $\theta_{sin}$ input to the feedback control unit 62 in FIG. 5.

[Math 21]

$$K_{0dot} = K_p$$

$$K_{1dot} = K_d$$

$$K_{2dot} = 0$$

$$K_{3dot} = 0$$

$$K_{4dot} = 0 \qquad \cdots (21)$$

In this case, the gain $K_p$ for the angle $\theta_{sint}$ ($\theta_{sin}$ in FIG. 5) and the gain $K_d$ for the angular velocity $d\theta_{sint}/dt$ ($d\theta_{sin}/dt$ in FIG. 5) on the command value side are the same as the gain $K_p$ for the angle $\theta$ and the gain $K_d$ for the angular velocity $d\theta/dt$ on the feedback side, respectively. That is to say, a common gain is set on the command value side and the feedback side.

In the third embodiment, different gains can be set on the command value side and the feedback side. In the third embodiment, different gains are preferably set on the command value side and the feedback side. In other words, it is preferable that the gain used in the computation of the target torque $T_{ta}$ and the gain used in the computation of the feedback torque $T_{fe}$ are different from each other.

A specific example of setting the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ will be described below. Note that the proportional gain $K_p$, the differential gain $K_d$, the second gain $G_p$, and the first gain $G_d$ are assumed to be set to the values in the above Expressions (11a), (11b), (11c) and (11d).

[First Setting Example]

In a first setting example, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set to values as in the following Expression (22).

[Math 22]

$$K_{0dot} = J_p * \frac{\omega^4}{\omega_{sw}^2} \quad (= K_p)$$

$$K_{1dot} = 0$$

$$K_{2dot} = 0$$

$$K_{3dot} = 0$$

$$K_{4dot} = 0 \qquad \cdots (22)$$

In this case, the transfer function $G(\theta_{sint} \to \theta_p)$ from the integrated angle command value $\theta_{sint}$ to the column angle $\theta_p$ is expressed by the following Expression (23a), and the transfer function $G(\theta_{sint} \to \theta_{sw})$ from the integrated angle command value $\theta_{sint}$ to the wheel angle $\theta_{sw}$ is expressed by the following Expression (23b).

[Math 23]

$$G(\theta_{sint} \to \theta_p) = \frac{(s^2 + \omega_{sw}^2) * \dfrac{\omega^4}{\omega_{sw}^2}}{(s^2 + 2\zeta\omega s + \omega^2)^2} \qquad \cdots (23a)$$

$$G(\theta_{sint} \to \theta_{sw}) = \frac{\omega^4}{(s^2 + 2\zeta\omega s + \omega^2)^2} \qquad \cdots (23b)$$

In this case, the wheel angle $\theta_{sw}$ responds with a fourth-order lag. In this case, the resonant frequency $\omega$ and the damping ratio $\zeta$ can be optionally set, in the same way as in the first embodiment.

[Second Setting Example]

In a second setting example, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set to values as in the following Expression (24).

[Math 24]

$$K_{0dot} = J_p * \frac{\omega^4}{\omega_{sw}^2} \quad (= K_p)$$

$$K_{1dot} = J_p * \frac{\omega^3}{\omega_{sw}^2} \quad (= \frac{K_d}{4})$$

$$K_{2dot} = 0$$

$$K_{3dot} = 0 \qquad \qquad \cdots (24)$$

$$K_{4dot} = 0$$

In this case, the transfer function $G(\theta_{sint} \rightarrow \theta_p)$ from the integrated angle command value $\theta_{sint}$ to the column angle $\theta_p$ is expressed by the following Expression (25a), and the transfer function $G(\theta_{sint} \rightarrow \theta_{sw})$ from the integrated angle command value $\theta_{sint}$ to the wheel angle $\theta_{sw}$ is expressed by the following Expression (25b).

[Math 25]

$$G(\theta_{sint} \rightarrow \theta_p) = \frac{(s^2 + \omega_{sw}^2) * \frac{\omega^3}{\omega_{sw}^2}}{(s + \omega)^3} \qquad \cdots (25a)$$

$$G(\theta_{sint} \rightarrow \theta_{sw}) = \frac{\omega^3}{(s + \omega)^3} \qquad \cdots (25b)$$

In this case, the wheel angle $\theta_{sw}$ responds with a third-order lag. In this case, the resonant frequency $\omega$ can be optionally set, in the same way as in the first embodiment.

[Third Setting Example]

In a third setting example, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set as in the following Expression (26).
[Math 26]

[Math 26]

$$K_{0dot} = J_p * \frac{\omega^4}{\omega_{sw}^2} \quad (= K_p)$$

$$K_{1dot} = J_p * \frac{2\zeta\omega^3}{\omega_{sw}^2} \quad (= \frac{K_d}{2})$$

$$K_{2dot} = J_p * \frac{\omega^2}{\omega_{sw}^2}$$

$$K_{3dot} = 0$$

$$K_{4dot} = 0 \qquad\qquad \cdots (26)$$

In this case, the transfer function $G(\theta_{sint} \to \theta_p)$ from the integrated angle command value $\theta_{sint}$ to the column angle $\theta_p$ is expressed by the following Expression (27a), and the transfer function $G(\theta_{sint} \to \theta_{sw})$ from the integrated angle command value $\theta_{sint}$ to the wheel angle $\theta_{sw}$ is expressed by the following Expression (27b).

[Math 27]

$$G(\theta_{sint} \to \theta_p) = \frac{(s^2 + \omega_{sw}^2) * \dfrac{\omega^2}{\omega_{sw}^2}}{(s^2 + 2\zeta\omega s + \omega^2)} \qquad \cdots (27a)$$

$$G(\theta_{sint} \to \theta_{sw}) = \frac{\omega^2}{(s^2 + 2\zeta\omega s + \omega^2)} \qquad \cdots (27b)$$

In this case, the wheel angle $\theta_{sw}$ responds with a second-order lag. In the third setting example, the resonant frequency $\omega$ and the damping ratio $\zeta$ can be optionally set, in the same way as in the first embodiment.

[Fourth Setting Example]

In a fourth setting example, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set as in the following Expression (28).
[Math 28]

$$K_{0dot} = J_p * \frac{\omega^4}{\omega_{sw}^2} \quad (= K_p)$$

$$K_{1dot} = J_p * \frac{3\omega^3}{\omega_{sw}^2} \quad (= \frac{3K_d}{4})$$

$$K_{2dot} = J_p * \frac{3\omega^2}{\omega_{sw}^2}$$

$$K_{3dot} = J_p * \frac{\omega}{\omega_{sw}^2}$$

$$K_{4dot} = 0 \qquad \cdots (28)$$

In this case, the transfer function $G(\theta_{sint} \to \theta_p)$ from the integrated angle command value $\theta_{sint}$ to the column angle $\theta_p$ is expressed by the following Expression (29a), and the transfer function $G(\theta_{sint} \to \theta_{sw})$ from the integrated angle command value $\theta_{sint}$ to the wheel angle $\theta_{sw}$ is expressed by the following Expression (29b).

[Math 29]

$$G(\theta_{sint} \to \theta_p) = \frac{(s^2 + \omega_{sw}^2) * \frac{\omega}{\omega_{sw}^2}}{s + \omega} \qquad \cdots (29a)$$

$$G(\theta_{sint} \to \theta_{sw}) = \frac{\omega}{s + \omega} \qquad \cdots (29b)$$

In this case, the wheel angle $\theta_{sw}$ responds with a first-order lag. In this case, the resonant frequency $\omega$ can be optionally set, in the same way as in the first embodiment.

Note that in this case, a low-pass filter (LPF) of first or higher order, having a cutoff frequency no higher than $\omega$, is preferably provided between the integrated angle command value computation unit 53 (see FIG. 2) and the angle control unit 54A (see FIG. 17).

[Fifth Setting Example]

In a fifth setting example, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$ are set as in the following Expression (30).

[Math 30]

$$K_{0dot} = J_p * \frac{\omega^4}{\omega_{sw}^2} \quad (= K_p)$$

$$K_{1dot} = J_p * \frac{4\xi\omega^3}{\omega_{sw}^2} \quad (= K_d)$$

$$K_{2dot} = J_p * \frac{2(1+2\xi^2)\omega^2}{\omega_{sw}^2}$$

$$K_{3dot} = J_p * \frac{4\xi\omega}{\omega_{sw}^2}$$

$$K_{4dot} = J_p * \frac{1}{\omega_{sw}^2} \qquad \cdots (30)$$

In this case, the transfer function $G(\theta_{sint} \to \theta_p)$ from the integrated angle command value $\theta_{sint}$ to the column angle $\theta_p$ is expressed by the following Expression (31a), and the transfer function $G(\theta_{sint} \to \theta_{sw})$ from the integrated angle command value $\theta_{sint}$ to the wheel angle $\theta_{sw}$ is expressed by the following Expression (31b).

[Math 31]

$$G(\theta_{sint} \to \theta_p) = \frac{s^2 + \omega_{sw}^2}{\omega_{sw}^2} \qquad \cdots (31a)$$

$$G(\theta_{sint} \to \theta_{sw}) = 1 \qquad \cdots (31b)$$

In this case, the wheel angle $\theta_{sw}$ responds without lag.

Note that in this case, a low-pass filter (LPF) of second or higher order, having a cutoff frequency no higher than $\omega$, is preferably provided between the integrated angle command value computation unit 53 (see FIG. 2) and the angle control unit 54A (see FIG. 17).

In the third embodiment, load compensation is performed, but load compensation does not necessarily have to be performed. In this case, a value $(T_{fb} + G_d \cdot dT_{tb}/dt + G_p \cdot T_{tb})$, obtained by adding the resonance control torque $T_{res}$ (= $G_d \cdot dT_{tb}/dt + G_p \cdot T_{tb}$) to the feedback control torque (basic torque command value) $T_{fb}$ becomes the integrated steering torque command value $T_{sint}$.

When there is no load compensation, the steering torque $T_{tb}$ is conceivably being fed back to the steering column 310 in advance, and accordingly with the second gain when there is no load compensation as $G_p{}'$, and with the second gain when there is load compensation as $G_p$, $G_p{}' = (G_p - 1)$ is set.

In the third embodiment, setting the proportional gain $K_p$, the derivative gain $K_d$, the second gain $G_p$, the first gain $G_d$, the proportional gain $K_{0dot}$, the first-order differential gain $K_{1dot}$, the second-order differential gain $K_{2dot}$, the third-order differential gain $K_{3dot}$, and the fourth-order differential gain $K_{4dot}$, to the respective values such as described above, enables response characteristics (such as n-th order lag and so forth) to be optionally set, in addition to the resonant frequency $\omega$ and the damping ratio $\zeta$.

Also, in the third embodiment, switching can be performed among the cooperative steering mode in which the electric motor 18 can be controlled based on the integrated angle command value $\theta_{sint}$, the manual steering mode in which the electric motor 18 can be controlled based only on the assist torque command value $T_{as}$, and the automatic steering mode in which the electric motor 18 can be controlled based only on the automatic steering command value $\theta_{adac}$.

That is to say, in the electric power steering system that can control the electric motor 18 based on the integrated angle command value $\theta_{sint}$, the electric motor 18 can be controlled based only on the assist torque command value $T_{as}$.

While the first embodiment, the second embodiment, and the third embodiment of this invention have been described above, this invention can also be carried out in yet other forms.

For example, in the first embodiment, the second embodiment, and the third embodiment, a dead band processing unit may be provided for at least one of the steering torque $T_{tb}$ input to the first torque computation units 63 and 153, and the steering torque $T_{tb}$ input to the second torque computation units 64 and 154. The reason for providing the dead band processing unit will be described later.

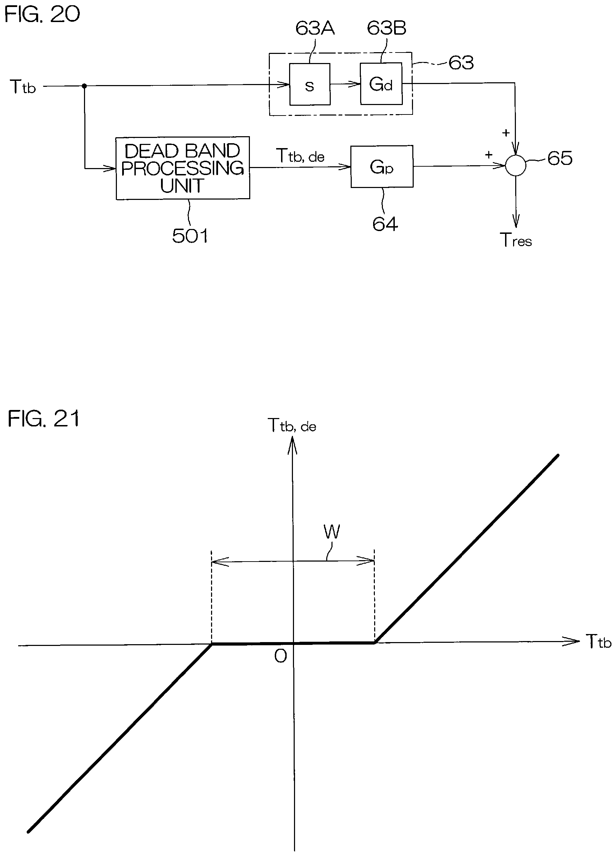

A case will be described below, with reference to FIG. 20, FIG. 23 and FIG. 24, in which the dead band processing unit is provided for at least one of the steering torque $T_{tb}$ input to the first torque computation unit 63 (see FIG. 5 and FIG. 17) and the steering torque $T_{tb}$ input to the second torque computation unit 64 (see FIG. 5 and FIG. 17) in the first embodiment (third embodiment). In FIG. 20, FIG. 23, and FIG. 24, only the parts of the configurations of the angle control units 54, 54A that are related to the computation of the resonance control torque $T_{res}$ are illustrated.

FIG. 20 is a block diagram illustrating an example in which a dead band processing unit 501 is provided upstream of the second torque computation unit 64.

The steering torque $T_{tb}$ is input to the dead band processing unit 501. FIG. 21 shows an example of input/output characteristics of the dead band processing unit 501.

With a dead band width of W, the dead band processing unit 501 outputs zero as a steering torque $T_{tb,de}$ following dead band processing in a case in which the steering torque $T_{tb}$ is within a range of -W/2 or greater and W/2 or smaller (dead band region).

In a region in which the steering torque $T_{tb}$ is smaller than -W/2, the dead band processing unit 501 outputs $[T_{tb} + (W/2)]$ as the steering torque $T_{tb,de}$ following the dead band processing. In a region in which the steering torque $T_{tb}$ is greater than W/2, the dead band processing unit 501 outputs $[T_{tb} - (W/2)]$ as the steering torque $T_{tb,de}$ following the dead band processing. The dead band width W is set in advance.

In this case, the second torque computation unit 64 computes second torque $G_p \cdot T_{tb,de}$ by multiplying the steering torque $T_{tb,de}$ following the dead band processing by the second gain $G_p$. Accordingly, in this case, the resonance control torque $T_{ress}$ is $G_d \cdot dT_{tb}/dt + G_p \cdot T_{tb,de}$.

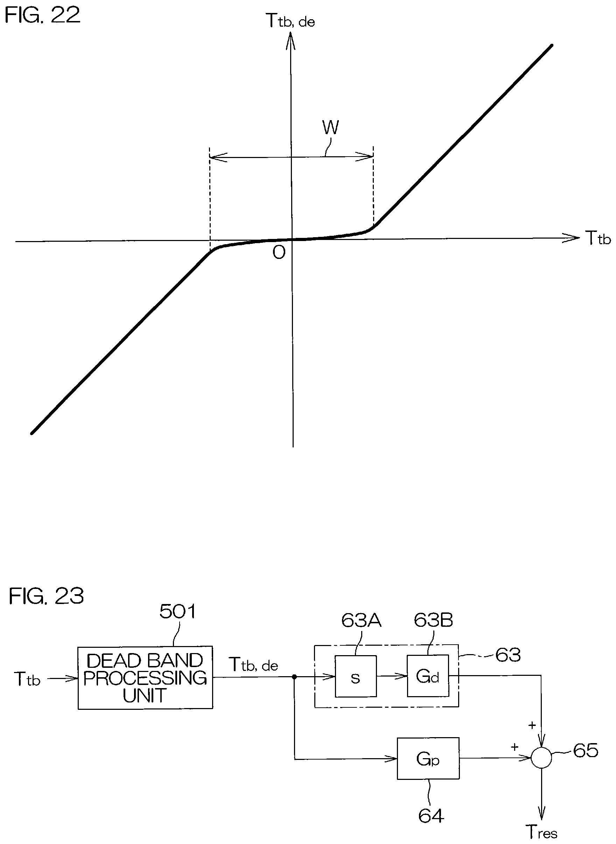

Note that within a dead band region in which the absolute value of the steering torque $T_{tb}$ is small, the dead band processing unit 501 may output a value close to zero as the steering torque $T_{tb,de}$ following the dead band processing. For example, the input/output characteristics of the dead band processing unit 501 may be characteristics such as shown in FIG. 22.

In other words, the input/output characteristics of the dead band processing unit 501 may be characteristics such that, within a dead band region (a range of -W/2 or greater and W/2 or smaller) in which the absolute value of the steering torque $T_{tb}$ is small, the absolute value of the steering torque $T_{tb,de}$ following the dead band processing gradually increases quadratically as the absolute value of the steering torque $T_{tb}$ increases, and, in a range in which the absolute value of the steering torque $T_{tb}$ is greater than the dead band region, the absolute value of the steering torque $T_{tb,de}$ following the dead band processing increases linearly as the absolute value of the steering torque $T_{tb}$ increases.

The dead band processing unit 501 may be provided upstream of both the first torque computation unit 63 and the second torque computation unit 64, as illustrated in FIG. 23.

In this case, the first torque computation unit 63 computes the first torque $Gd \cdot dT_{tb,de}/dt$ by multiplying the time differential value $dT_{tb,de}/dt$ of the steering torque $T_{tb,de}$ following the dead band processing by the first gain $G_d$. The second torque computation unit 64 computes the second torque by multiplying the steering torque $T_{tb,de}$ following the dead band processing by the second gain $G_p$. Accordingly, in this case, the resonance control torque $T_{ress}$ is $G_d \cdot dT_{tb,de}/dt + G_p \cdot T_{tb,de}$.

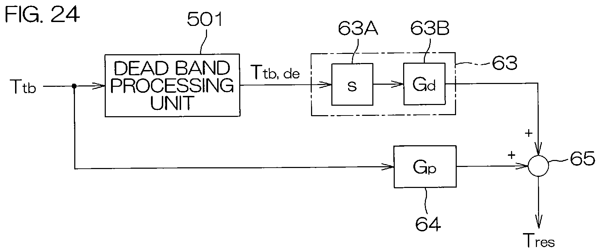

The dead band processing unit 501 may be provided upstream of the first torque computation unit 63, as illustrated in FIG. 24.

In this case, the first torque computation unit 63 computes the first torque $G_d \cdot dT_{tb,de}/dt$ by multiplying the time differential value $dT_{tb,de}/dt$ of the steering torque $T_{tb,de}$ following the dead band processing by the first gain $G_d$. Accordingly, in this case, the resonance control torque $T_{ress}$ is $G_d \cdot dT_{tb,de}/dt + G_p \cdot T_{tb}$.

The reason for providing the dead band processing unit 501 will be described. The steering torque $T_{tb}$ (primarily the sum of the driver torque $T_d$ applied to the steering wheel 2 by the driver and the force generated by steering inertia) may be offset by friction and so forth. Accordingly, even when the absolute value of the actual steering torque $T_{tb}$ is zero or close to zero, the absolute value of the steering torque $T_{tb}$ that is detected by the torque sensor 12 may be greater than the absolute value of the actual steering torque $T_{tb}$. Hence, when the absolute value of the actual steering torque $T_{tb}$ is zero or close to zero, a resonance control torque $T_{res}$ ($= G_d \cdot dT_{tb}/dt + G_p \cdot T_{tb}$) that is greater than anticipated will be output, resulting in deviation (steering angle deviation) from the steering angle command value (integrated angle command value $\theta_{sint}$).

As illustrated in FIG. 20, FIG. 23 and FIG. 24, when the dead band processing unit 501 is provided to at least one of the steering torque $T_{tb}$ input to the first torque computation unit 63 and the second torque computation unit 64, the following effects can be obtained. That is to say, in a range in which the resonance of the steering wheel 2 is great (a range in which the absolute value of the steering torque $T_{tb}$ is great), resonance control based on the resonance control torque $T_{res}$ can be performed. On the other hand, in a range in which the resonance of the steering wheel 2 is small and resonance control is not necessary (a range in which the absolute value of the steering torque $T_{tb}$ is small), steering angle deviation based on offset of the steering torque $T_{tb}$ can be suppressed.

Although omitted from illustration, the dead band processing unit 501 described above may be provided only upstream from the second torque computation unit 154 (FIG. 15) of the second embodiment, or the dead band processing unit 501 described above may be provided only upstream from the first torque computation unit 153 (FIG. 15) of the second embodiment. Also, the dead band processing unit 501 described above may be provided upstream from both the first torque computation unit 153 (FIG. 15) and the second torque computation unit 154 (FIG. 15) of the second embodiment.

In the above first, second, and third embodiments, the first weighting unit 56, the second weighting unit 57, and the third weighting unit 58 are provided, but the third weighting unit 58 may be omitted. In this case, two types of steering modes, i.e., the manual steering mode and the cooperative steering mode, will be available.

In the first, second and third embodiments described above, assumption is made that the steering torque (torsion bar torque) $T_{tb}$ is expressed as $T_{tb} = k_{tb} (\theta_{sw} - \theta_p)$, and this $T_{tb}$ is fed back, but, as can be understood from the expression $T_{tb} = k_{tb} (\theta_{sw} - \theta_p)$, this is equivalent to feeding back the relative angle between the steering wheel 2 and the steering column 310. Accordingly, providing an angle sensor for detecting the rotational angle of the steering wheel 2 enables similar control without using the steering torque $T_{tb}$ by feedback of the relative angle between the steering wheel 2 and the steering column 310 and the relative speed between the steering wheel 2 and the steering column 310 (which may be detected by a speed sensor or may be the differential value of the relative angle).

In this case, the resonance control torque $T_{res}$ is expressed as $T_{res} = [\{G_p{}' \times (\text{relative angle})\} + \{G_d{}' \times (\text{relative speed})\}]$. Here, $G_p{}' = Gp \cdot k_{tb}$, and $G_d{}' = Gd \cdot k_{tb}$ hold.

Although embodiments of the present invention are described in detail above, these are merely specific examples used to clarify the technical content of the present invention, and the present invention should not be construed as being limited to these specific examples, and the scope of the present invention is limited only by the appended claims.

This application corresponds to Japanese Patent Application No. 2022-6684 filed with the Japan Patent Office on January 19, 2022, the entire disclosure of which is incorporated herein by reference.

Description of the Reference Numerals

1 Electric power steering system
3 Steered wheels
4 Steering operation mechanism
18 Electric motor
51, 151 Assist torque command value setting unit
52 Manual steering command value generation unit
53 Integrated angle command value computation unit
54 Angle control unit
55 Torque control unit
59 Addition unit
61 Low-pass filter
62, 400 Feedback control unit
63, 153 First torque computation unit
63A, 153A Differential computation unit
63B, 153B First gain multiplication unit
64, 154 Second torque computation unit
65, 155 First torque addition unit
66, 156 Disturbance torque estimation unit
67, 157 Second torque addition unit
401 Target torque computation unit
402 Feedback torque computation unit
403 Torque deviation computation unit
501 Dead band processing unit

**Claims**

**1.** A motor control device that controls an electric motor that applies steering force to an output shaft linked to a steering wheel via a torsion bar, the motor control device comprising:

a steering torque detection unit that detects a steering torque applied to the steering wheel; and
a motor torque command value setting unit that sets a motor torque command value that is a target value of motor torque of the electric motor, wherein
the motor torque command value setting unit includes

a basic torque command value setting unit that sets a basic torque command value,
a correction unit that corrects the basic torque command value set by the basic torque command value setting unit, using a resonance control torque, and
a motor torque command value computation unit that computes the motor torque command value based on the basic torque command value following correction by the correction unit, and

the resonance control torque is set using a first torque obtained by multiplying a differential value of the steering torque by a predetermined first gain, and a second torque obtained by multiplying the steering torque by a predetermined second gain.

2. The motor control device according to claim 1, further comprising:
a rotational angle detection unit that detects a rotational angle of the electric motor, wherein the basic torque command value setting unit includes

an angle deviation computation unit that computes a difference between a rotational angle command value that is a target value of a rotational angle of the output shaft and a rotational angle of the output shaft computed from the rotational angle detected by the rotational angle detection unit, and
a basic torque command value computation unit that computes the basic torque command value by performing predetermined feedback computation with respect to angle deviation computed by the angle deviation computation unit.

3. The motor control device according to claim 1, further comprising:

a rotational angle detection unit that detects a rotational angle of the electric motor, wherein the basic torque command value setting unit includes

a target torque computation unit that computes a target torque based on a rotational angle command value that is a target value of a rotational angle of the output shaft,
a feedback torque computation unit that computes a feedback torque based on the rotational angle detected by the rotational angle detection unit, and
a basic torque command value computation unit that computes the basic torque command value by computing a deviation between the target torque and the feedback torque, and

a gain used in the computation of the target torque and a gain used in the computation of the feedback torque are different from each other.

4. The motor control device according to claim 2 or 3, further comprising:

a manual steering command value computation unit that generates a manual steering command value; and
an integrated angle command value computation unit that computes an integrated angle command value by adding the manual steering command value to an automatic steering angle command value, wherein the rotational angle command value is the integrated angle command value.

5. The motor control device according to any one of claims 1 to 4, further comprising a disturbance torque estimation unit that estimates disturbance torque other than the motor torque of the electric motor acting on the output shaft, based on the motor torque command value or the motor torque generated by the electric motor, and a rotational angle of the output shaft, wherein the correction unit is configured to correct the basic torque command value by using the resonance control torque and the disturbance torque.

6. The motor control device according to any one of claims 1 to 5, wherein a dead band is set for at least one of the steering torque that is an input value for computing the first torque, and the steering torque that is an input value for computing the second torque.

FIG. 1

FIG. 2

EP 4 468 591 A1

FIG. 3

ASSIST TORQUE
COMMAND VALUE(Tas)

〈RIGHT〉

O

〈LEFT〉
STEERING
TORQUE (Ttb)

FIG. 4

Ttb

N・Tm

Lower column

Jc , $\theta$c , $\ddot{\theta}$c

c

k

FIG. 5

## FIG. 6

$T_{tb}$

$T_{rl}$

$N \cdot T_m + T_f$

2

10

212

21

9

211

20

18

## FIG. 7

81

86

89

66

85

Be

Ae

$N \cdot T_m$

u1

$\dot{\hat{x}_e}$

$\dfrac{1}{S}$

$\hat{x}_e$

$\hat{\theta}$

87

88

$\dot{\hat{\theta}}$

L

84

$\hat{T}_{lc}$

83

82

Ce

$\theta$

y

FIG. 8

EP 4 468 591 A1

FIG. 9

FIG. 10

FIG. 11

## FIG. 12

Steering wheel
$J_{sw}$, $\theta_{sw}$, $\dot{\theta}_{sw}$ — 2

$-T_{tb} = -k_{tb}(\theta_{sw} - \theta_p)$

$k_{tb}$

Steering column
$J_p$, $\theta_p$, $\dot{\theta}_p$ — 310

$N \cdot T_m$
$= -K_p \cdot \theta_p - K_d \cdot \dot{\theta}_p$
$+ G_p \cdot T_{tb} + G_d \cdot \dot{T}_{tb}$

301

FIG. 13

FIG. 14

$T_d$

Steering wheel
$J_{sw}, \theta_{sw}, \dot{\theta}_{sw}$

~2

10~

$k_{tb}$

$-T_{tb} = -k_{tb}(\theta_{sw} - \theta_p)$

Steering column
$J_p, \theta_p, \dot{\theta}_p$

~310

$N \cdot T_m$
$= -K_p \cdot \theta_p - K_d \cdot \dot{\theta}_p + K_R \cdot T_{tb}$

302

FIG. 15

EP 4 468 591 A1

FIG. 16

$T_d$

Steering wheel
$J_{sw},\ \theta_{sw},\ \dot{\theta}_{sw}$

~ 2

$10$ ~

$-T_{tb} = -k_{tb}(\theta_{sw} - \theta_p)$

$k_{tb}$

~ 310

Steering column
$J_p,\ \theta_p,\ \dot{\theta}_p$

$N \cdot T_m$
$= N \cdot T_{as}$
$+ G_p \cdot T_{tb} + G_d \cdot \dot{T}_{tb}$

<u>303</u>

FIG. 17

FIG. 18

$T_d$

Steering wheel
$J_{sw}$, $\theta_{sw}$, $\dot{\theta}_{sw}$

~ 2

10 ~

$k_{tb}$

$-T_{tb} = -k_{tb}(\theta_{sw} - \theta_p)$

~ 310

Steering column
$J_p$, $\theta_p$, $\dot{\theta}_p$

$N \cdot T_m$
$= K_{0dot} \cdot \theta_{sint} + K_{1dot} \cdot \dot{\theta}_{sint} + K_{2dot} \cdot \ddot{\theta}_{sint}$
$+ K_{3dot} \cdot \theta_{sint}^{(3)} + K_{4dot} \cdot \theta_{sint}^{(4)}$
$- K_p \cdot \theta_p - K_d \cdot \dot{\theta}_p + G_p \cdot T_{tb} + G_d \cdot \dot{T}_{tb}$

<u>304</u>

FIG. 19

FIG. 20

FIG. 21

FIG. 22

FIG. 23

FIG. 24

## INTERNATIONAL SEARCH REPORT

International application No.

**PCT/JP2022/015152**

### A. CLASSIFICATION OF SUBJECT MATTER

*H02P 23/04*(2006.01)i; *B62D 5/04*(2006.01)i; *B62D 6/00*(2006.01)i; *H02P 23/12*(2006.01)i
FI:  H02P23/04; B62D5/04; B62D6/00; H02P23/12

According to International Patent Classification (IPC) or to both national classification and IPC

### B. FIELDS SEARCHED

Minimum documentation searched (classification system followed by classification symbols)

H02P23/04; B62D5/04; B62D6/00; H02P23/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-183046 A (JTEKT CORP.) 15 November 2018 (2018-11-15)<br>paragraphs [0015]-[0042], [0084]-[0097], fig. 1-3, 9-11 | 1-6 |
| Y | WO 2014/136515 A1 (NSK LTD.) 12 September 2014 (2014-09-12)<br>paragraphs [0056]-[0070], fig. 12-18 | 1-6 |
| Y | JP 2020-192855 A (JTEKT CORP.) 03 December 2020 (2020-12-03)<br>paragraphs [0019], [0026], fig. 2 | 3-6 |
| Y | JP 2021-154895 A (JTEKT CORP.) 07 October 2021 (2021-10-07)<br>paragraphs [0026], [0044], [0072], fig. 1-5 | 3-6 |
| Y | JP 2020-19346 A (JTEKT CORP.) 06 February 2020 (2020-02-06)<br>paragraphs [0020]-[0025], fig. 2 | 4-6 |
| Y | JP 2012-183881 A (JTEKT CORP.) 27 September 2012 (2012-09-27)<br>paragraphs [0032]-[0033], fig. 5 | 6 |
| A | JP 55-76760 A (NSK LTD.) 10 June 1980 (1980-06-10)<br>p. 1, lower right column, line 16 to p. 3, upper right column, line 18, all drawings | 1-6 |

☐ Further documents are listed in the continuation of Box C.          ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/015152**

| Patent document cited in search report | | | Publication date (day/month/year) | Patent family member(s) | | | Publication date (day/month/year) |
|---|---|---|---|---|---|---|---|
| JP | 2018-183046 | A | 15 November 2018 | (Family: none) | | | |
| WO | 2014/136515 | A1 | 12 September 2014 | US | 2015/0191200 | A1 | |
| | | | | paragraphs [0078]-[0093], fig. 12-18 | | | |
| | | | | EP | 2937266 | A1 | |
| | | | | CN | 104583056 | A | |
| JP | 2020-192855 | A | 03 December 2020 | US | 2020/0377148 | A1 | |
| | | | | paragraphs [0025], [0032], fig. 2 | | | |
| | | | | EP | 3744611 | A1 | |
| | | | | CN | 111994167 | A | |
| JP | 2021-154895 | A | 07 October 2021 | (Family: none) | | | |
| JP | 2020-19346 | A | 06 February 2020 | US | 2020/0039576 | A1 | |
| | | | | paragraphs [0027]-[0034], fig. 2 | | | |
| | | | | EP | 3608203 | A1 | |
| | | | | CN | 110775151 | A | |
| JP | 2012-183881 | A | 27 September 2012 | (Family: none) | | | |
| JP | 55-76760 | A | 10 June 1980 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018183046 A

- JP 2022006684 A